# EUROPEAN PATENT SPECIFICATION

(11) **EP 2 210 372 B1**
(45) Date of publication and mention of the grant of the patent: **13.04.2011**
(21) Application number: 08804614.9
(22) Date of filing: 23.09.2008
(51) Int. Cl.: H04L 29/06, H04H 60/04, G10H 1/00, H04L 12/46

(54) **DIGITAL MULTIMEDIA NETWORK WITH HIERARCHICAL PARAMETER CONTROL PROTOCOL**
DIGITAL-MULTIMEDIA-NETZWERK MIT HIERARCHISCHEM PARAMETERSTEUERPROTOKOLL
RÉSEAU MULTIMÉDIA NUMÉRIQUE DOTÉ D'UN PROTOCOLE DE COMMANDE PARAMÉTRIQUE HIÉRARCHISÉ

(30) Priority: 04.10.2007 EP 07117923; 05.10.2007 EP 07117998
(43) Date of publication of application: 28.07.2010
(73) Proprietor: U-MAN Universal Media Access Networks GmbH, 40479 Düsseldorf (DE); Networked Audio Solutions CC, Grahamstown (ZA)
(72) Inventor: GURDAN, Robby, Graefenberg 91322 (DE); FOSS, Richard, Grahamstown (ZA)
(74) Representative: Charles, Glyndwr
(86) International application number: PCT/EP2008/062699
(87) International publication number: WO 2009/043762

(56) References cited:
- US-A1- 2003 172 797
- US-A1- 2005 239 396
- 84.148.59.33: "XFN-Cross Fire Network"[Online] 10 September 2006 (2006-09-10), pages 1-1, XP002533830 wikipedia wikipedia Retrieved from the Internet: URL:http://de.wikipedia.org/w/index.php?ti tle=XFN-Cross_Fire_Network&oldid=21303855> [retrieved on 2009-06-24]

## Description

The invention is in the domain of digital multimedia networking. In particular, the invention relates to a method and a digital multimedia network which employ a hierarchical parameter control protocol that can be used for controlling, monitoring and connection management of audio and video on the digital network.

In contrast to most other industries, digital networks have not gained that much footage in the audio/video industry as expected until today. The reason therefore is neither the lack of available technologies, nor the demand for a digital solution. A problem lies more in the basic understanding of how modem technology can achieve substantial benefit for the user migrating to digital, in a non existing common standard, and how a user can understand and cope with a complex system, moreover made by many different manufacturers. To see digital audio/video networks with the eyes of a user it is generally expected that those systems solve tasks set by the user. During the last years, and due to the lack of a common standard, users who were using or even just experimenting with digital solutions had to either specialize their gear to fit it to custom solutions or reduce the expectations to the digital multimedia system so far that the system was rather more than an audio data transport medium.

Conventional multimedia networks have several disadvantages. There is a lack of integration of connections management with control and monitoring. In many cases an established control and monitoring protocol (for example Crown IQ) is carried by a network such as CobraNet that has its own established approach to media routing (for example an SNMP-based approach). Conventional networks require that a controller discovers all the capabilities of target devices on the control network before it is able to communicate. HiQnet requires that there be a URL from which device information can be obtained. A controller for Crown IQ requires the presence of an Object Information file to determine the capabilities of a device. An ACN controller gets a device's capabilities from an XML-based DDL document that it receives from the target device. An AV/C controller extracts device capabilities from an Audio Subunit descriptor that it gets from the target AV/C device. An AES-24/QSC-24 controller learns of a device's capabilities by requesting its handles and corresponding device paths from the registry. An IEC 62379 device controller uses SNMP to discover device capabilities via the MIB's of devices. A disadvantage with this approach are that small controller devices will typically not have the memory and processor capabilities to enumerate the immense amounts of information needed to describe, as an example, a large mixing console. Further, it is not possible to control several parameters of various devices in a large network without first discovering all the capabilities of all these devices.

An example of such a prior art system is disclosed inUS 2005/239396 and US 2003/172797.

Accordingly, it is an object of the present invention to provide a user friendly digital multimedia network which integrates connection management of devices with control and monitoring of device parameters.

This object is achieved by a multimedia network comprising the features of claim 1.

The invention provides a digital multimedia network of connected devices,
wherein a device parameter of a device is controlled by sending a command message to said device containing a tree structure hierarchical parameter address which consists of parameter grouping identifiers each corresponding to a hierarchy level of a predetermined tree structured parameter hierarchy used for addressing device parameters throughout said digital multimedia network.

The digital multimedia network of the present invention allows a communication between devices or apparatuses without the necessity that a source device which can be integrated in a source apparatus, such as a digital amplifier has to discover the capabilities of a target device which can be integrated in a target apparatus, such as a loudspeaker.

The digital multimedia network provides turn-key solutions for Audio/Video-streaming and for Command- and Control applications. All network parameters like, for example Levels/Faders, Mutes, Matrices and metering can be easily created, and connected to other parameters in the digital multimedia network without any line software code having to be written. Existing proprietary remote software and protocols can be easily adapted.

A digital multimedia network of the present invention provides an "analog feeling" concerning connection management. A user can establish a connections between two devices or apparatuses in the same way, he or she did this on a conventional analog system. Command and control parameters are easy to set up and the control is performed in real time as in a conventional analog network. In a possible embodiment there is a remote access possible with a browser on various platforms like PC, MAC, Linux, PDA and even mobile phones.

Manufacturers can implement and use the digital multimedia network of the present invention without complex changes in their hardware. Manufacturers can also rely on existing and proved third party hardware for nodes and routers.

The digital multimedia network of the present invention provides fully digital audio and video streaming. Any device or apparatus within the network can be immediately part of not only an audio and remote network but also a full real-time video matrix.

The digital multimedia network of the present invention is an IP-based network. Every device of the digital multimedia network can have an IP address and a subnet mask. The digital multimedia network uses an IP based protocol for command & control and connection management. In a possible embodiment, the digital multimedia network provides a physical Ethernet connection and can distribute Ethernet and TCP/IP data and others.

The digital multimedia network of the present invention provides redundancy on various levels and a simple but effective way of determining problems (e.g. such as a broken cable or a powered down device). The digital multimedia network of the present invention supports the user in case of an error and provides a Quality of Service that the user has learned to expect from conventional analog systems.

The digital multimedia network of the present invention provides a "real-time feeling" for a user. Its latency is far below one millisecond (from any input to any output). Important for today's coherent sound reinforcement systems is the fact that the digital multimedia network is fully phase accurate throughout the whole network.

The user is not involved in a setup of the network's latency. This is done entirely by the digital multimedia network and its devices and is usually determined without any user interference. The digital multimedia network of the present invention as well as its devices are highly compatible, It builds on standardized physical layer protocols such as Ethernet and IEEE 1394 (Fire wire) and also utilizes the Internet Protocol (IP) for control. Furthermore, it provides interfacing possibilities and bridging to various analog and digital audio and video systems and networks including AES/EBU, MADI, Ethersound, Cobranet, DV, HDV etc.

The digital multimedia network of the present invention can handle different word clocks and sample rates (e.g. up to 192 kHz). A CD Player for example can stream with 44.1 kHz/16 Bit into the network while a High-End recording machine streams with 192 kHz/24 Bit into the same network. Signal degradation does not exist within the system, even if a channel is split up to feed hundreds of outputs at the same time.

The digital multimedia network of the present invention can be setup in advance and all settings can be stored. On site the necessary cabling between the racks or devices is reduced to one or two cables. The large, heavy and expensive multicore and the highly complex onsite cabling and setup of conventional networks does not exist any longer.

The digital multimedia network of the present invention can use CAT5/6 and multimode fiber standard cabling and can therefore be implemented easily and cost-effective in existing infrastructures.

Due to the fact that the digital multimedia network of the present invention provides a decentralized solution of intelligent peer to peer devices, signal and control are decoupled, and the digital multimedia network itself (instead of for example one huge server) is in control of establishing and keeping any connection and forwarding any command. Due to this fact it is possible to automatically re-establish connections, scale any function of any device, and build tailor-made systems for every occasion and even add gear on site when needed (e.g. additional Microphone preamps, additional monitoring, additional audio channels etc.). This also helps reducing costs for the user.

In a possible embodiment, the digital multimedia network of the present invention uses the 1394b transport standard. This guarantees a highly accurate and at the same time extremely cost effective solution. Any non-streaming data within the network is handled by an IP-based layer above which UDP datagrams carry the control protocol messages. Access can be via standard physical Ethernet. Tunnelling of serial and other data is possible.

In a possible embodiment, the digital multimedia network comprises a network streaming engine based on the IEC 61883 protocol standard that allows for transport of a huge variety of professional and standard audio and video streams. It allows direct, native and seamless access of DV and HDV video formats to be streamed in between devices, with ultra low latency and jitter and a subsample accuracy.

In a possible embodiment, devices are peer to peer connected to the digital multimedia network and are controlling each other through standard IP messages. Each device can be identified by a unique IP address and a subnet mask. Different subnets are logically organized as IP subnets.

In a possible embodiment of the digital network according to the present invention, the command message is sent to a device addressed by an IP-address indicated in said command message.

In a possible embodiment, the device is an XFN device integrated in a multimedia apparatus or connected to a multimedia apparatus via an interface.

In an embodiment of the digital multimedia network according to the present invention, the tree structure parameter hierarchy comprises several parameter hierarchy levels of parameter groupings of the digital multimedia apparatus comprising said XFN device.

In an embodiment of the digital multimedia network according to the present invention, said network comprises cascaded backbones each consisting of a ring of routers, wherein to the routers of peripheral backbones controllable XFN devices of a digital multimedia apparatus are connected.

In an embodiment of the digital multimedia network according to the present invention, a wildcard parameter group identifier is provided for selecting all device parameters of the next lower level of said tree structured parameter hierarchy.

The invention further provides a controllable digital multimedia apparatus to which an XFN device is connected comprising at least one adjustable device parameter, wherein upon reception of a command message by said XFN device containing a structured parameter address which consists of parameter grouping identifiers each corresponding to a hierarchy level of a predetermined tree structured parameter address for addressing said device parameter and containing a parameter value said device parameter of said multimedia apparatus is adjusted to the parameter value contained in said command message (CMD).

In an embodiment of the controllable digital multimedia apparatus according to the present invention, the XFN device is connected to said apparatus or integrated in said apparatus and comprises a processor for processing an XFN stack.

In an embodiment of the controllable digital multimedia apparatus, the XFN device is integrated in the digital multimedia apparatus.

In an alternative embodiment, the XFN device is connected to the digital multimedia apparatus via an interface.

In an embodiment of the controllable digital multimedia apparatus, a memory is provided for storing an integer parameter index value for each device parameter of said multimedia apparatus.

In an embodiment of the controllable digital multimedia apparatus according to the present invention, a flag register is provided for storing flags associated with each device parameter of said multimedia apparatus which can be modified by a command message comprising a flag command qualifier.

In an embodiment of the controllable digital multimedia apparatus according to the present invention, the multimedia apparatus is formed by an audio apparatus.

In a further embodiment of the controllable digital multimedia apparatus according to the present invention, the multimedia apparatus is formed by a video apparatus.

The invention further provides a method for controlling at least one parameter of a multimedia apparatus by sending a command message to a control device connected to said multimedia apparatus, wherein the command message contains a structured parameter address which consists of parameter grouping identifiers each corresponding to a level of a predetermined tree structured parameter hierarchy for addressing the device parameters and containing a parameter value to adjust the addressed device parameter of said multimedia apparatus.

In an embodiment of the method according to the present invention, the command message comprises an IP-header including a source IP-address of a sending XFN device of a source apparatus and a destination IP-address of a receiving XFN device of a target multimedia apparatus,
an UDP-header including a source port and a destination port,
a parameter control protocol header and a hierarchical parameter address or a parameter index value, and
a parameter value.

In an embodiment of the method according to the present invention, said parameter control protocol header comprises
a target device ID,
a sender device ID,
a sender parameter ID,
an user level,
a secure pin,
a message type,
a sequence ID,
a command executive, and
a command qualifier.

In a possible embodiment of the method according to the present invention, said hierarchical parameter device comprises
a section block ID,
a section type ID,
a channel number ID,
a parameter block ID,
a parameter block index ID,
a parameter type ID, and
a parameter index ID.

In the following, preferred embodiments of the digital multimedia network and the method to control a device parameter of a multimedia apparatus are described with reference to the enclosed figures.
Fig. 1 shows a topology of a possible embodiment of the digital multimedia network 1 according to the present invention;
Fig. 2 shows a backbone ring of routers as employed by the digital multimedia network 1 as shown in Fig. 1;
Fig. 3 shows a further example of a topology of a digital multimedia network 1 according to the present invention comprising a cascaded ring structure;
Fig. 4 shows a diagram for illustrating the transmission of a command message between a source apparatus and a target apparatus in the digital multimedia network according to the present invention;
Fig. 5 shows a block diagram of an embodiment of an XFN device as employed by the digital multimedia network according to the present invention;
Fig. 6 shows a diagram of a possible embodiment of an XFN device as employed by the present invention;
Fig. 7 shows a flowchart illustrating the processing of a received command message;
Fig. 8 shows a flowchart for processing command messages from a message queue by an XFN device as shown in Figs. 5, 6;
Fig. 9 shows a flowchart for a generic request and response handling as performed by an XFN device as shown in Figs. 5, 6;
Fig. 10 shows a further flowchart for illustrating an application request and blocking response as employed by an XFN device as shown in Figs. 5, 6;
Fig. 11 shows a further flowchart for transmitting a command message as performed by an XFN device as shown in Figs. 5, 6;
Fig. 12 shows a further flowchart for illustrating the retransmit timer thread as implemented by an XFN device as shown in Figs. 5, 6;
Fig. 13 shows a diagram for illustrating a possible data structure of a command message as employed by the present invention;
Fig. 14 shows a further diagram for illustrating the data structure of a command message as employed by the present invention;
Fig. 15 shows a further diagram for illustrating the data structure of a command message as employed by the present invention;
Fig. 16 shows a diagram for illustrating a command message as employed by the present invention;
Fig. 17 shows a conceptual model for the creation of a device parameter as performed by the present invention;
Fig. 18 shows a conceptual model for the processing of a command message as performed by the present invention;
Fig. 19 shows the data format of an index command message as employed by the present invention;
Fig. 20 shows a possible data format of a response message as employed by the present invention;
Fig. 21 shows a modifier parameter block as employed in a possible embodiment of the digital multimedia network according to the present invention;
Fig. 22 illustrates the modification of a hierarchical address data block by a modifier parameter block as shown in Fig. 21;
Fig. 23 shows a block diagram of a possible embodiment of a device for processing control command messages as employed by the digital multimedia network according to the present invention;
Fig. 24 shows an abstract presentation of a router provided within a XFN device as shown in Fig. 23;
Fig. 25 shows an example of a routing by means of a mixer matrix as provided within an audio subsystem of the XFN device as shown in Fig. 23;
Fig. 26 shows different QSEL-slots of AVS-receivers for providing isochronous data channels within the digital multimedia network according to the present invention;
Fig. 27 shows an embodiment of a possible interface of a digital multimedia apparatus with an integrated XFN device as employed by the present invention;
Fig. 28 shows an example for performing connection management within the digital multimedia network according to the present invention;
Fig. 29 shows an example of a tree structured parameter hierarchy used for addressing device parameters according to the present invention;
Fig. 30 shows an example of a joined parameter group as employed by the present invention;
Fig. 31 shows an example of an editor software with desk items as employed by the present invention;
Fig. 32 shows a further example of desk item editor screen as employed by the present invention;
Fig. 33 shows a further example of a desk item editor screen as employed by the present invention;
Fig. 34 shows a possible screen of device classes as employed in the digital multimedia network according to the present invention;
Figs. 35A, 35B show different embodiments for the arrangement of an XFN device according to the present invention;
Fig. 36 shows a diagram of different protocol levels as employed by a digital multimedia apparatus according to the present invention;
Fig. 37 shows an example of a digital multimedia network according to the present invention;
Fig. 38 shows a diagram for illustrating the generation of an isochronous data stream between two digital multimedia apparatuses according to the present invention;
Figs. 39 shows a table of examples for establishing an isochronous data stream between two apparatuses within the digital multimedia network according to the present invention;
Figs. 40A, 40B show different topologies of a digital multimedia network according to the present invention;
Fig. 41 shows an example of a get command message to receive parameter values according to the present invention;
Fig. 42 shows an example of a get command message to receive parameter values according to the present invention;
Fig. 43 shows an example of a set command message for adjusting a parameter value according to the present invention;
Fig. 44 shows a diagram for illustrating the relocation of parameter values between different digital multimedia networks according to the present invention.

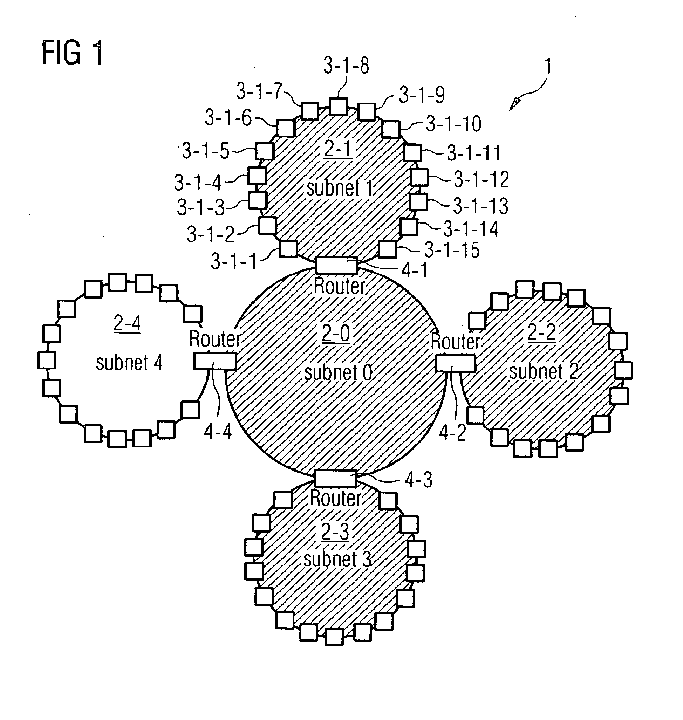

As shown in Fig. 1 a digital multimedia network 1 can be organized in subnets 2, that form together the actual digital multimedia network 1.

In a possible embodiment a subnet 2-i can either have: CAT 6 cabling with up to 160 audio channels (48 kHz/24 bit) or up to 14 Full HDV video channels plus 80 MBit/s IP data reaching up to 100 m in between units, or an optical connection with up to 320 audio channels (48 kHz/24 bit) or up to 32 full HDV video channels plus 160 MBit/s IP data reaching up to 1000 m in between units.

There is no limitation to the number of subnets 2-i within a digital multimedia network 1 of the present invention. The digital multimedia network 1 supports native bridging of other network-standards like Ethersound or Cobranet or multichannel streams like e.g. MADI into native audio streams that can then be used by every device within the network. The digital multimedia network 1 further supports in possible embodiments all kinds of digital audio like AES/EBU, ADAT, Tdif, or SPDIF as well as analog sources up to 24 bit/192 kHz.

The digital multimedia network 1 supports highly precise multiple clocks on each bus, and a fully transparent multiuser connection management. In a possible embodiment, the digital multimedia network 1 of the present invention comprises a ring connection topology which is by default already redundant.

The audio latency within the multimedia network 1 is very low in a subnet 2. In order to keep the latency consistent and low at the same time the digital multimedia network 1 can be organized in a so called multiple ring topology.

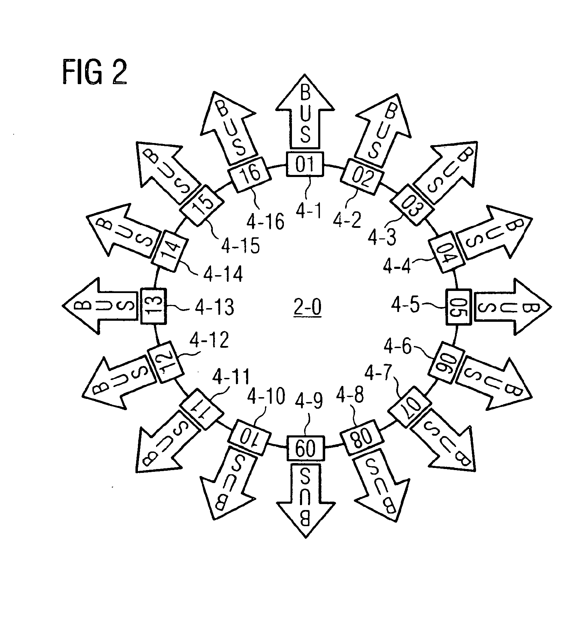

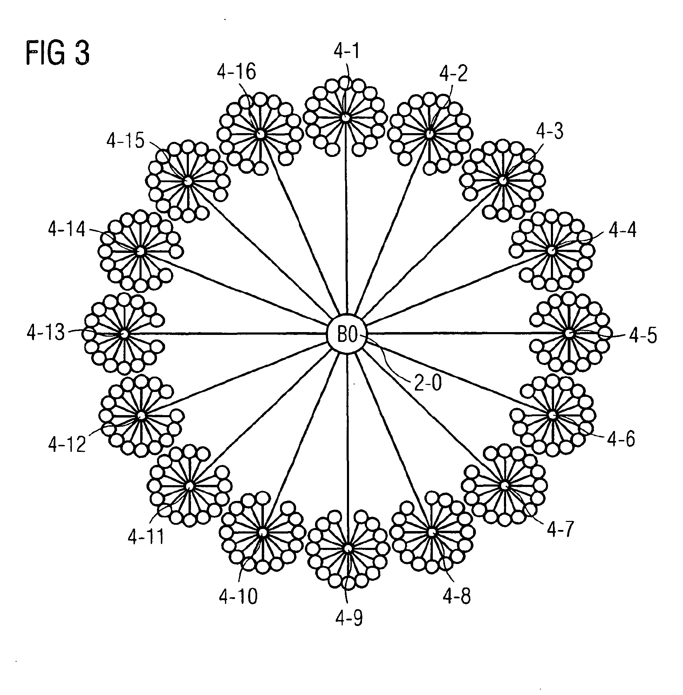

In bigger systems a middle ring of e.g. 16 routers 4 as shown in Fig. 2 the so called backbone 2-0 connects all other subnets 2-i of the network 1 that is basically unlimited. In the example in Fig. 3 the backbone concept allows that many control devices 3 can be used with a global network latency from a device to any other device being less than 1 ms. Each control device 3 can be integrated in a multimedia apparatus 5 such as a mixing console or connected to a multimedia apparatus 5 via an interface.

The backbone, i.e. subnet 2-0 uses a central bus or a cluster of those, that consist utterly e.g. up to 16 routers 4. Every router 4-i can connect to an additional bus with either again a backbone filled with routers or with data streaming devices. By using this concept it is possible to build a vast digital multimedia network 1 with a very low latency.

In the embodiment shown in Fig. 3, the digital multimedia network 1 uses cascaded backbones. The center backbone (2-0) in the middle hosts e.g. 16 routers 4, which are individually connected to a corresponding number of satellite backbones. Those satellite routers are each connected with a bus that holds each e.g. 15 control devices 3. This topology will meet the maximum latency of 1 ms (and maximal 4 bus hops). The digital multimedia network 1 consists in this example of 16 x 15 x 15 = 3600 devices and 16 x 15 = 240 routers with a total network latency of less than 1 ms.

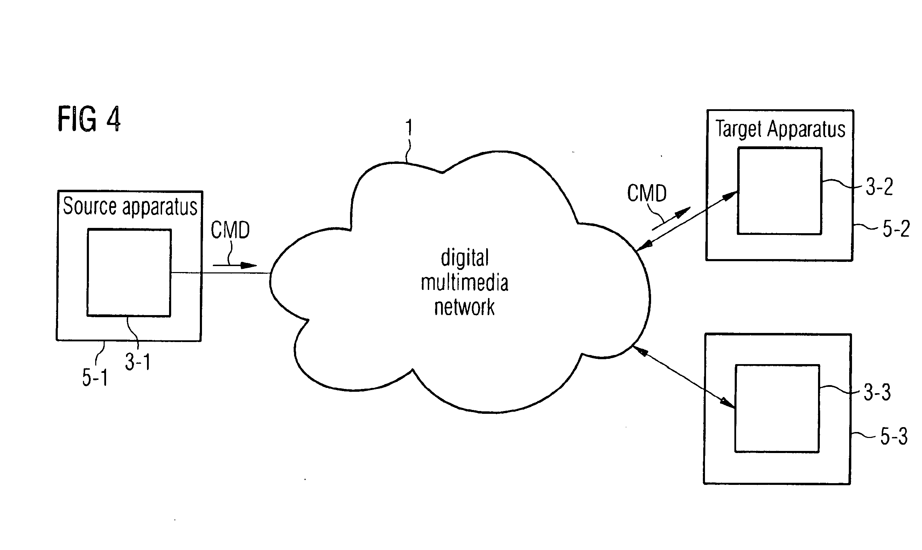

Each control device 3 of the digital multimedia network 1 according to the present invention as shown in Fig. 4 has an IP stack, and is addressable via its IP address. Above the IP stack, each device 3 incorporates a protocol layer that comprises a tree-structured parameter address hierarchy. This parameter address hierarchy reflects the structure of the respective apparatus in which the device 3 is integrated or to which it is connected, whereby nodes at the higher levels of the hierarchy represent groupings of lower level nodes. A sending device 3-1 can send a command message CMD to a receiving device in a target apparatus as shown in Fig. 4.

For example, an XFN device 3 can be integrated in a mixing console 5 which has an input section that comprises a number of channel strips, each with a number of parameter groupings which in turn contain a number of device parameters. Preferably, these parameter groupings are natural to audio engineers and are reflected in the groupings within the device's hierarchy. The lowest level nodes (leaves of the tree) represent actual parameter values and their formats. For any device or apparatus parameter, there is a fixed number of groupings from the parameter level up to the topmost tree grouping level.

Different level descriptions can be used for different industries (e.g. audio, video, avionics, etc.).

The address of a particular parameter of a control device 3 is constituted from a list of several grouping IDs, for example seven parameter grouping IDs or level IDs.

These group objects and their associated IDs can be published. A manufacturer can follow a specification guideline regarding the structuring of parameters in a control device 3 of a multimedia apparatus 5. Thus, a user is able to view an implementation chart for controlling a device 3 and set up a simple controller to control any parameter of the device 3. Furthermore, because of the levelled structure of the messaging, "wildcard" IDs can be used as level IDs, thereby indicating a selection of all nodes at the next level of the tree. This wildcard ID allows for the control of a large number of device parameters with a single command CMD that can be broadcasted to all devices 3 on the digital multimedia network 1.

A receiving device 3-2 of a target apparatus is able to receive a range of commands (CMD) for example from a controller or from a sending device 3-1 of a source apparatus. It is possible to trace through the hierarchical tree structure of a device 3 by using "level" commands. These level commands return, for each node of the tree, the subnodes below the node. Through the application of these level commands, a device 3 or an application allows the user to discover device parameters of remote devices and to control them.

A control device 3 can hold an integer parameter index value for each device parameter that it contains. On request from a controller which can comprise an XFN device 3, via a "get index" command (with an associated structured address), a device 3 of a target apparatus provides this index value to the controller. This allows the controller, in future, to address the parameter with the parameter index value rather than a structured hierarchical address by means of an indexed command message CMD_{index}. The command messages CMD are transmitted in a possible embodiment wrapped in a IP data packet having at least one command message CMD as payload data.

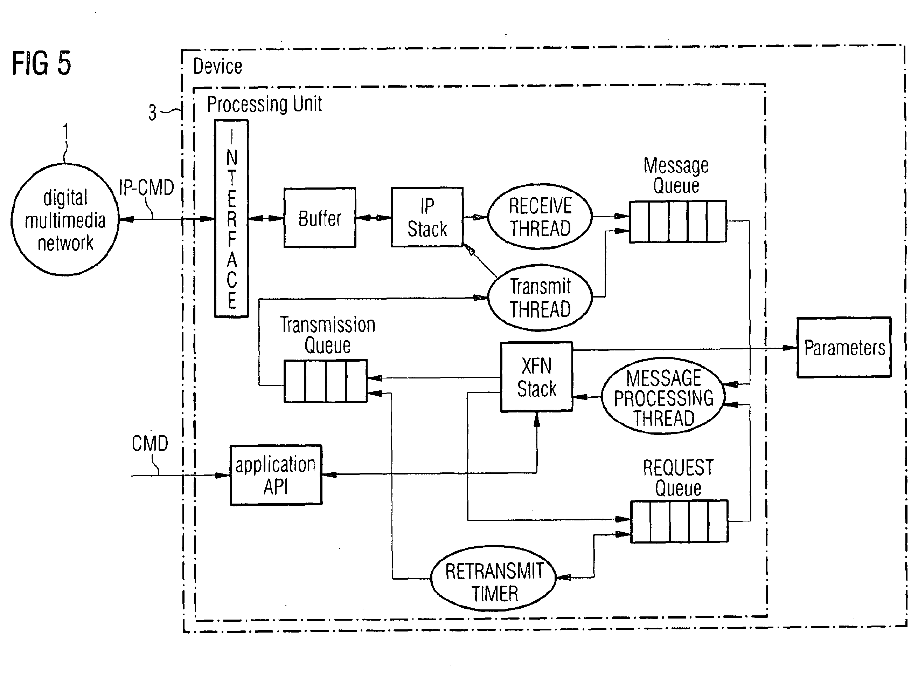

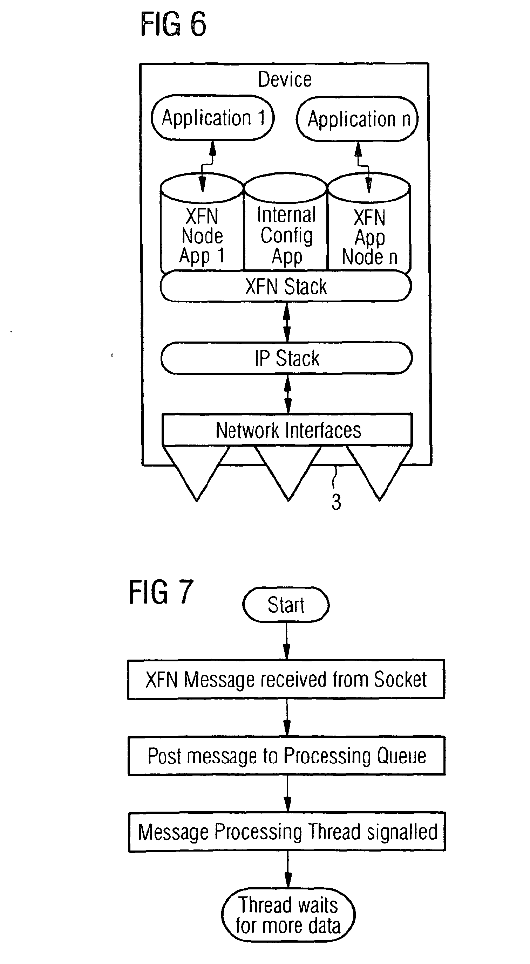

Figs. 5, 6 shows block diagrams of embodiments of a control device 3 within the network 1 according to an embodiment of present invention. The control device 3 according to the embodiment as shown in Figs. 5, 6 can consist of a number of modules comprising network interfaces, an IP stack, an XFN stack and XFN application. The variety of network interfaces include Ethernet cards, Firewire interfaces etc; The XFN (cross fire network) stack itself provides facilities for the receipt and transmission of IP based command messages CMD according to the hierarchical control protocol. The XFN stack also hosts a number of XFN nodes. Any number of XFN nodes can reside within a single device 3 and are individually addressable within the XFN device 3 and each contain an isolated level and parameter address hierarchy. Every control device 3 is required to implement an Internal Configuration Application Node. This node resides within the XFN stack and provides a central point for XFN device configuration such as configuring network interfaces, and provides additional information regarding the other XFN nodes that reside within this device.

Any number of applications - typically an XFN application - can create an XFN node within the XFN stack and setup levels and device parameters within this XFN node. All XFN communications between this application and other devices is done via the XFN stack using an XFN API and the device parameters that it creates within the XFN stack. This permits the application to join its local device parameters to any other remote XFN parameters and to receive notifications if the value of those remote device parameters is altered.

### • API - Stack Initialisation and Cleanup

XFN InitialiseTasks is responsible for the creation of the XFN stack and all of its queues, threads and associated structures. This also creates the configuration application within the XFN stack. The XFN stack is able to receive and process control and command messages CMD.

XFN Cleanup - shuts down the XFN Stack and releases all memory held by the XFN stack.

### • API - Hierarchy Creation

The creation of device parameters is intended to be an automated process. An application similar to the current XFN Generator application is used to layout the levels that are required within a device and the code required to create these levels in terms of XFN are generated. The generated code can make calls to the following functions.
addXFNDeviceNode - this function creates another XFN node within the XFN device;
createXFNLevel - this function creates another level within the XFN stack;
addLevelToXFNDevNode - this function associates a created level with a particular device node;
addChildXFNLevel - this function creates the hierarchical associations between hierarchy levels;
setXFNLevelAlias - associated with every XFN level is a textual name or description called an alias.

This function sets this alias to the specified value.
createXFNParameter - this function creates another parameter within the XFN stack. Some of the arguments passed to the function include the address of a callback routine within the application space as well as a pointer to a block of user data. If the value of this device parameter is altered or requested outside of the application this callback is called to either set or return the current value of the device parameter. The XFN stack does not have any knowledge pertaining to the nature of device parameters or their values. The XFN stack, however, has an indication of the data type associated with the device parameter through the specification of the VALFT during parameter creation.
addParameterToXFNLevel - this function associates a created device parameter with the specified level. Although device parameters can be tagged to any levels, the XFN specification requires that device parameters only be associated with the bottom most level within a hierarchy and the number of levels within an XFN hierarchy must always correspond to a predetermined number of levels N, e.g. N = 7.
addParameterToXFNDevNode - this function builds an indexed parameter list that allows device parameters to be addressed directly using an indexed XFN message.

### • API - XFN Messaging

XFN messaging is typically directed at XFN parameters and occurs between XFN stacks. It is not recommended for an application to send messages directly to an XFN stack. XFN messaging can be blocking or non-blocking and may request that a response be returned.
setRemoteParamValue_block_fdb - this function sets the value of a remote parameter using a blocked full datablock transfer.
setRemoteParamValue_nonb_fdb - this function sets the value of a remote parameter using a non-blocking full datablock transfer. As this function does not block, it takes as arguments a reference to a callback function that is to be called, should a response from this set message be received.
setRemoteParamValue - this function sets the value of a remote parameter using an indexed command. This function does not block or require a response.
setParamValue - this function is used to set the parameter value of a local device parameter by specifying the parameter ID. This device parameter set is done using normal XFN messaging and serves as a wrapper for an indexed XFN message.
getRemoteParamValue_block_fdb - this function sends a full datablock blocking get request to the specified device parameter. The returned value is copied into a response buffer supplied by the application.
getRemoteParamValue_nonb_fdb - this function sends a full datablock non-blocking get request to the specified device parameter. As this function does not block, it takes as arguments a reference to a callback function that is to be called, should a response for this command message CMD be received.
sendGenezicJoinRequest - this function is responsible for setting up an XFN parameter join between a local device parameter, specified using the parameter ID, and a remote device parameter specified using the full datablock address.

### • API - Level Commands

Level commands are provided to facilitate the exploring of a device 3 to determine its capabilities and device parameters that are available. Levels can be represented using an alias and a level identifier. The level identifier consists e.g. of a 4-bit type filed followed by the actual value. The length of this value field varies depending on the level as specified within a specification of the control protocol.

getChildLevelAliases - this function returns the child level aliases for a specified parent level. For example, if an application wishes to discover the first level within an XFN hierarchy, it sends a full XFN datablock command with the target datablock set to all OxEE's. When parsing the XFN datablock level addresses, the XFN stack finds the first occurrence of OxEE and returns all the aliases and level datablock addresses for the child nodes of that level.

### • API - Helper Functions

createDatablock - given an integer array and a user supplied data buffer this process converts the values specified within the integer array into a full XFN datablock address.

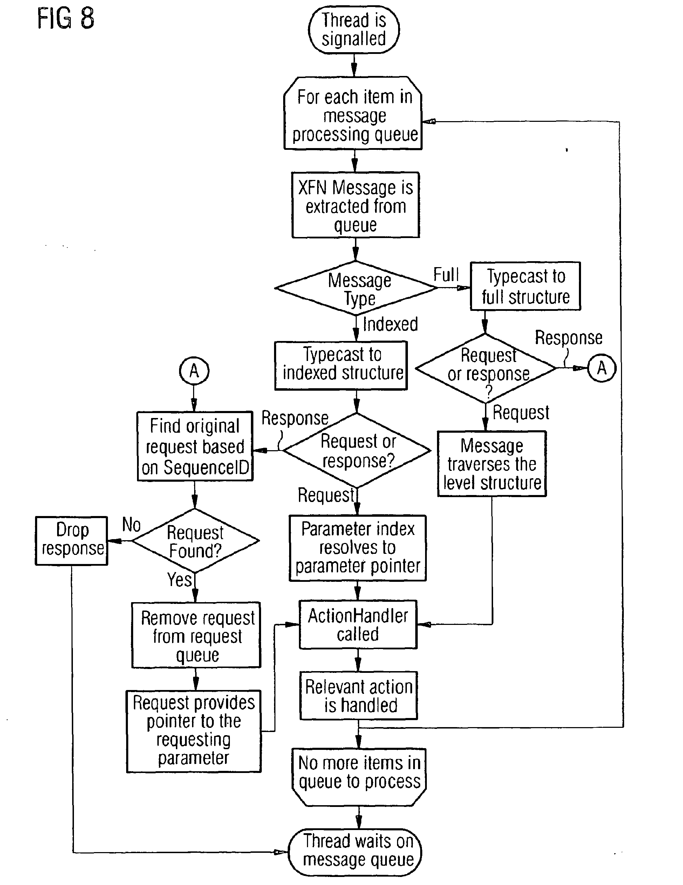

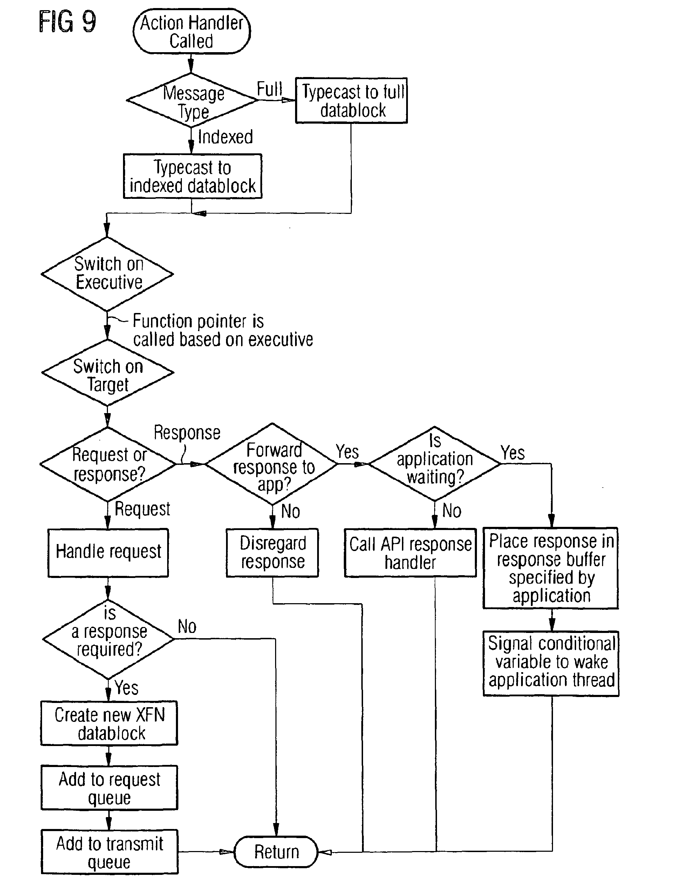

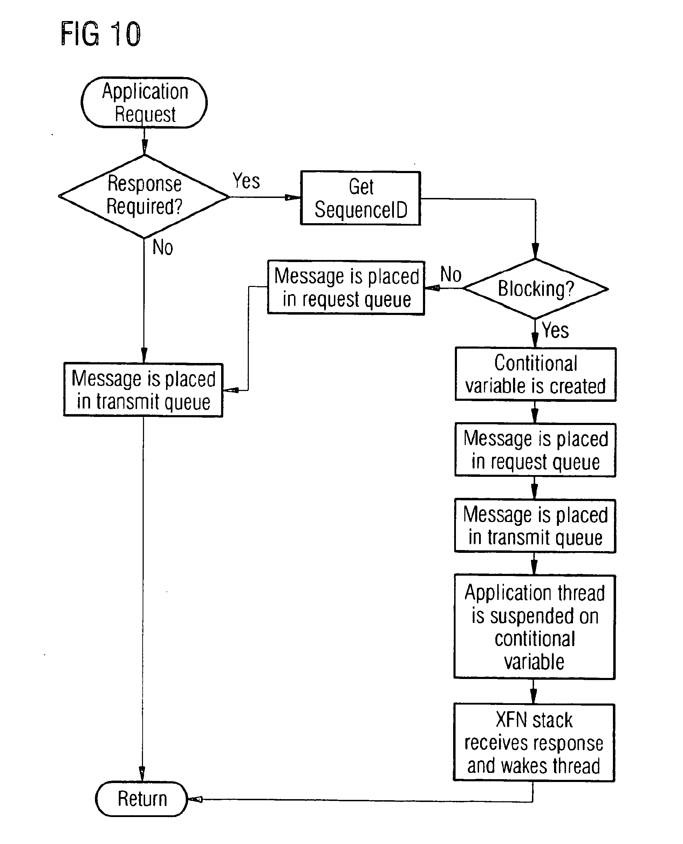

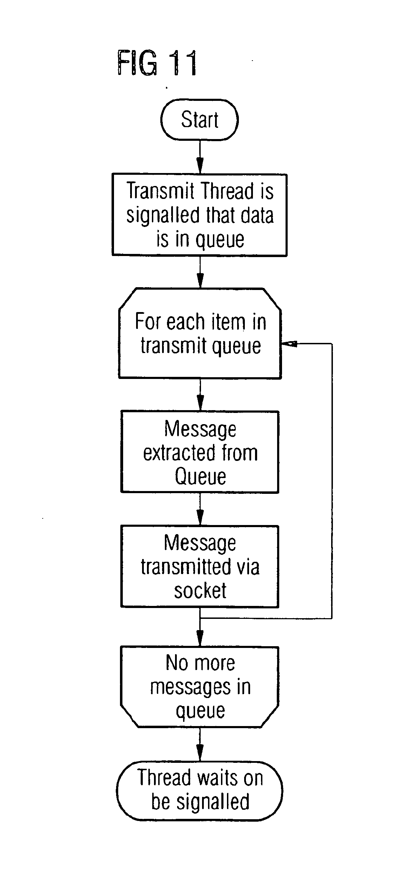

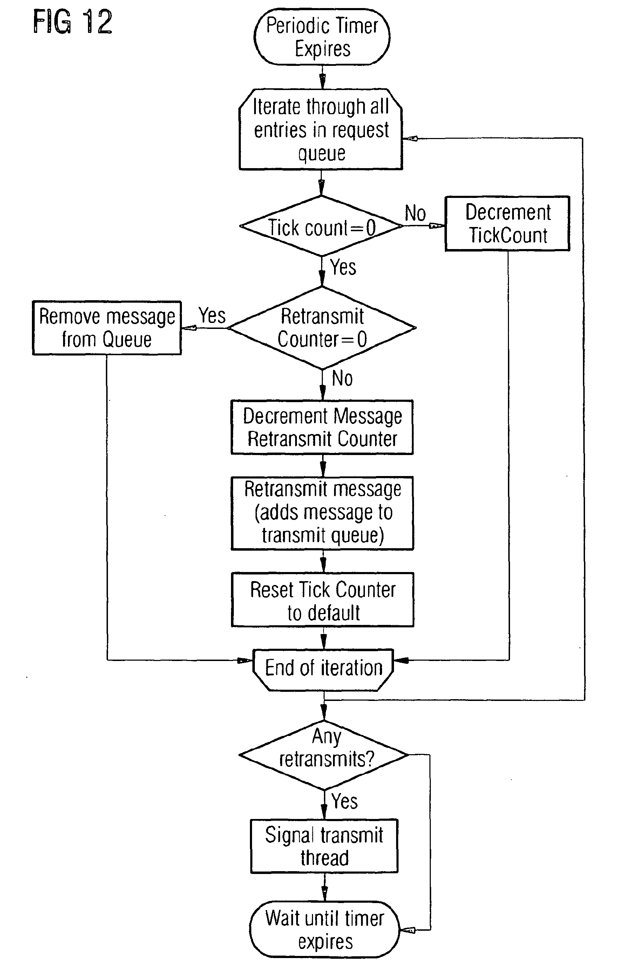

Fig. 7 - 12 show flow charts of subroutines as employed by the method and system according to the present invention.

The network 1 according to the present invention employs a hierarchical control protocol. This hierarchical control protocol has a number of advantages that sets it apart from current control protocols. Every device parameter is described by a hierarchical series of, for example, seven attributes where the higher level attributes indicate high level groupings within a control device 3. This arrangement of attributes means that a single command CMD broadcast across the digital multimedia network 1 has the capability of controlling an enormous number of device parameters. This has important implications with regard to rapid control and minimal bandwidth utilization. A multi level layer control protocol also allows for unicast control over a particular device parameter. A further consequence of the hierarchical nature of the control protocol is the determination of device parameters on a "need to know" basis. Thus, at any particular level, and hence device grouping, all the subgroups at the next lower level can be easily determined via a single command CMD. This allows an application to provide a user with a simple parameter search capability, which does not require reading the entire parameter set from a control device 3.

The method and network according to the present invention employ a control protocol whose fixed hierarchical message structure models the groupings of device parameters found in professional entertainment devices, thereby allowing for comprehensive control over a network 1 of such control devices 3.

The method and network employing the hierarchical control protocol according to the present invention can be used in a wide range of fields such as live sound, studies, hotels and law counts.

The live sound amplifiers, mixing consoles, signal processing units, breakout boxes, and possibly a workstation, can all reside on the same network, and each containing an IP stack and a protocol stack. Via protocol commands CMD, it is possible to:
- modify the control and connection management parameters of a device 3 from the front panel of a device;
- enumerate (via level commands) and subsequently modify the control and connection management parameters of any other apparatus 3 on the network 1 from the front panel of a control device or its apparatus;
- use a workstation to create a graphic display of control and connection management parameters, and then via the protocol commands enumerate and subsequently modify the control and connection management parameters of any device or apparatus on the digital multimedia network 1;
- join parameters into groups by using the front panel of a control device or apparatus or a workstation graphic display;
- set up modifiers within devices 3 by using the front panel or a workstation graphic display;
- incorporate a simple controller into the network 1, and by setting up controllers to emit predetermined protocol messages, control one or more device parameters simultaneously (via wildcard level values or joins);

In studios synthesizers, breakout boxes, mixing consoles, signal processing units, and workstations, can all reside on the same network, and can each contain an IP stack and a protocol stack. Via protocol commands, it is possible to:
- from a workstation, enumerate all control devices 3 on the network 1, and create a patch bay from which control devices 3 can be linked together via multicore cables (isoch streams). Inner cables (sequences) of these multicores can be routed within on-device audio routing matrices;
- integrate device parameter control and monitoring into the patch bay, where the same protocol stack is used to handle control, monitoring, and connection management messages.

In hotels or convention centers breakout boxes, mixing consoles, signal processing units, and workstations can all reside on the same network, and can each contain an IP stack and a protocol stack. Via protocol commands it is possible to from any zone in the hotel/convention centre route audio from devices in other zones to devices in this zone. This can be done from the front panel of an apparatus 5 within the zone, such as a breakout box, or from a workstation within the zone.

The XFN (Cross Fire Network) protocol is a hierarchical command and control protocol. XFN is an IP based peer to peer network protocol, in which any apparatus 5 on the network 1 may send or receive connection management, control and monitoring messages. The size and capability of apparatuses 5 on the network 1 can vary. Some apparatuses 5 are large and incorporate extensive functionality, while other apparatuses 5 are small with limited functionality.

In the hierarchical command and control protocol as employed by the present invention, each parameter stored in a control device 3 or a corresponding apparatus 5 can be addressed via a hierarchical structure that reflects the natural layout of the apparatus 5 to which the XFN device 3 is connected or in which the XFN device 3 is integrated. For example, there might be an input section on a mixing console apparatus that has a number of channel strips. Each channel strip might have a gain control, a block of equalizers, and a fader control. Each equalizer block will have its own structuring. Each of these groupings is considered to exist at a separate hierarchical level. At the lowest hierarchical level of any device structure are device parameters, i.e. parameters of the corresponding apparatus.

A command message (CMD) can access a parameter of a control device 3 by providing a hierarchical parameter address HPA that models the position of the parameter within the apparatus 5, and thereby allows access to it. Each control device 3 can implement an XFN stack that parses such a command message structure, and be able to locate the device parameter.

In a possible embodiment, a "wild card" mechanism allows for control over multiple device parameters. If the address of a command message CMD contains a wild card parameter at any particular hierarchy level, then the addressing applies to all possibilities at that hierarchy level. In this way a single command message (CMD) can affect a large number of device parameters.

Apart from addressing a device parameter via its hierarchical position in the apparatus, it is also possible to address the device parameter via a unique identifier (ID). Each parameter device has a unique ID, and this ID can be obtained by addressing the device parameter and requesting it. Further command messages CMD can replace the hierarchical parameter address HPA, and simply provide the respective ID to access the device parameter, thereby reducing message bandwidth.

The command and control protocol further allows device parameters to be joined into groups. Each device parameter can hold a list of other device parameters on the same or different devices, to which it is joined. If the device parameter is modified by a command message CMD, then that same command message CMD is directed at all device parameters within its list. For example, a fader on a mixing console typically has a device parameter that represents its position. This device parameter might be joined to fader parameters on other mixing consoles, and possibly to gain parameters on breakout boxes. When the single fader is moved, its group list is scanned and command messages CMD are sent to all joined device parameters.

The command and control protocol as employed by the present invention can corporate in a possible embodiment "Modifiers", whereby any command message can have its hierarchical message structure modified at any one of the levels. A modifier can for example increment a channel number level of all command messages CMD entering a control device 3 of an apparatus 5, and thereby effect immediate control over a second block of channels.

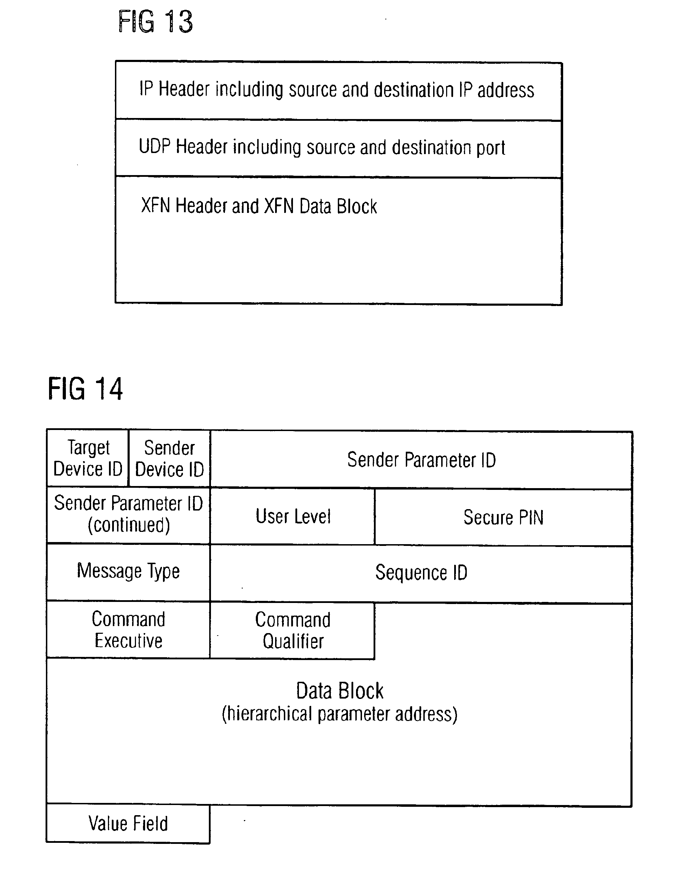

A command message (CMD) can be contained within the data area of a UDP datagram. The UDP header and data area can in turn be contained within the data area if an IP datagram. Every IP datagram has within its header a source and destination IP address. The overall layout of a command message (CMD) is shown in Figure 13.

The primary purpose of command and control messages CMD is to get and set the various parameters of apparatuses, and in so doing control the various capabilities of these apparatuses 5. A command message (CMD) is a data structure with a number of components. The full layout of the command message (CMD) is given in Figure 14. When setting the value of a device parameter, a data block, i.e. a hierarchical parameter address is followed by a value field. In a possible embodiment, a header of a command and control message CMD can comprise the data fields as shown in Fig. 14.

Target Device ID and Sender Device ID: Usually, each control device 3 within the digital multimedia network 1 is uniquely addressed via an IP address. However, it may happen that a control device 3 incorporates a number of units that function as complete devices, or that a PC acts as a proxy for a number of non-XFN devices, such as AV/C devices. In such cases, the target and sender device ID's are used to distinguish the individual control devices 3 at the same IP address.

Sender Parameter ID: Every device parameter within a control device 3 has a unique parameter ID. For example, a gain parameter on a mixing console has a unique parameter ID, just as a graphic slider on a workstation control window has a unique parameter ID. A command message CMD is usually generated and transmitted to a destination parameter of a receiving (target) device, due to a change in a source parameter of a sending (source) device. It is often necessary for the destination device parameter of the receiving device 3 within a target apparatus to interact with the source parameter of the sending device 3 within a source apparatus. Hence, a sender parameter ID of a source parameter is provided.

User Level: It is useful to assign user levels to users based on how comprehensively they can access control devices 3 and their associated device parameters. This data field allows device parameters to know the user level of a user who has submitted a command via a command message CMD, and to allow the device parameter to act appropriately depending on this user level.

Secure PIN: The Secure PIN mechanism provides an access control over a device's parameter. This can be useful, for example, when command messages CMD control the routing of audio that contains sensitive information. In this case the PIN that accompanies the command messages CMD are used to determine whether the source of the command message CMD has the appropriate access rights.

Message Type: Certain command messages CMD are requests, and others form responses. Some command messages CMD contain detailed hierarchical information data to describe a device parameter, while others contain parameter ID's. The Message type field indicates the nature of the command message CMD,

Sequence ID: If a command message sending device of a source apparatus transmits a large number of command messages CMD, and does not wait for a response before transmission, then it should be able to identify the responses. The sequence ID enables this identification.

Command Executive and Command Qualifier: Every command message CMD contains a command together with an indication (via the data block) of the device parameter or group of device parameters that the command message CMD relates to. Each device parameter can have a number of attributes such as its value, its state (identified by flags), its name, etc. The command executive component of a command message CMD indicates the fundamental nature of the command (get, set, etc), while the command qualifier allows the command executive to be directed at a particular attribute of a device parameter, or a particular grouping of device parameters (such as a selection group).

Besides the header data, a command and control message (CMD) comprises a data block: The data block provides the address of a target device parameter of a target apparatus in a N-level hierarchical format. This hierarchical structure enables groups of device parameters to be addressed with a single command message CMD. From a manufacturer's point of view, this is the most important component of the command message CMD, and appropriate hierarchical structures can be chosen for each device parameter.

The command message data bock is used to address a target parameter via a N-level hierarchy. The structure of the data block results from the observation that any apparatus 5 can be viewed as a series of functional groupings and that device parameters are positioned at the lowest level of such a series of groupings. For an example, an audio mixing console apparatus 5 comprises such groupings.

For example, an audio mixing console apparatus 5 can have the following top level groupings:
- a digital and analogue input section,
- an input matrix to patch these analogue and digital inputs to channels,
- an input section comprising a number of channels with various signal shaping functions,
- a bus matrix where inputs and outputs are routed to and from buses, respectively,
- an output section comprising a number of channels with various signal shaping functions,
- an output matrix to patch the various output channels to digital and analogue outputs,
- a digital and analogue output section.

The input section has a number of channels, wherein each channel has a block of equalizer and compressor parameters. Each equalizer parameter within the equalizer parameter block can be assigned a particular value.

A similar hierarchy can be constructed for inter-device connection management parameters by viewing their functional groupings. For example most apparatus 5 that utilize digital audio networking can be considered to have input or output sections that transmit clusters of channels, where each of these clusters have parameters such as channel count associated with them.

In a possible embodiment, in particular suited for professional audio-related parameters, a hierarchical multi-level parameter address MPA conforms with the following hierarchical functional groupings:
- section block (level 1),
- section type (level 2),
- channel number (level 3),
- parameter block (level 4),
- parameter block index (level 5),
- parameter type (level 6),
- parameter index (level 7).

In the following, these functional groupings are briefly described:
Section Block (level 1): This is the highest functional group. Any device can be considered to comprise a number of sections. For example, there might be an Input section, Output section, Input Matrix section, Output Matrix section, etc. This top level grouping will identify the high level section block within which the device parameter resides.
Section Type (level 2): This can be viewed as a sub-group within the section block, and is used to differentiate components of the section block. For example, within the Input section block of a mixing console, there can be various types of inputs - mic inputs, line inputs, tape inputs, etc.
Channel Number (level 3): Most audio or video parameters are related to an audio or video channel. These device parameters can be responsible for processing a channel or routing a channel. It is important to be able to trace a channel throughout a multi-device network 1, and by ensuring that each parameter structure includes the channel number at level 3, this capability is facilitated.
Parameter Block (level 4): It often happens that device parameters are clustered into parameter groups, and that these parameters as a group allow for the processing and routing of audio channels. For example, there can be a block of equalizers that allow for wide ranging equalization of an audio channel.
Parameter Block Index (level 5): This grouping allows for differentiation of similar components within a parameter block. For example, there can be equalization sub groupings of device parameters related to Q, Frequency, and Gain.
Parameter Type (level 6): As the grouping name indicates, this level provides the type of the device parameter being accessed, examples being gain, low frequency, threshold, etc.
Parameter index (level 7): This final level provides for accurate addressing if there are, for example, many parameters of the same type that process the audio of a channel. The occurrence of multiple gain parameters within a channel is an example.

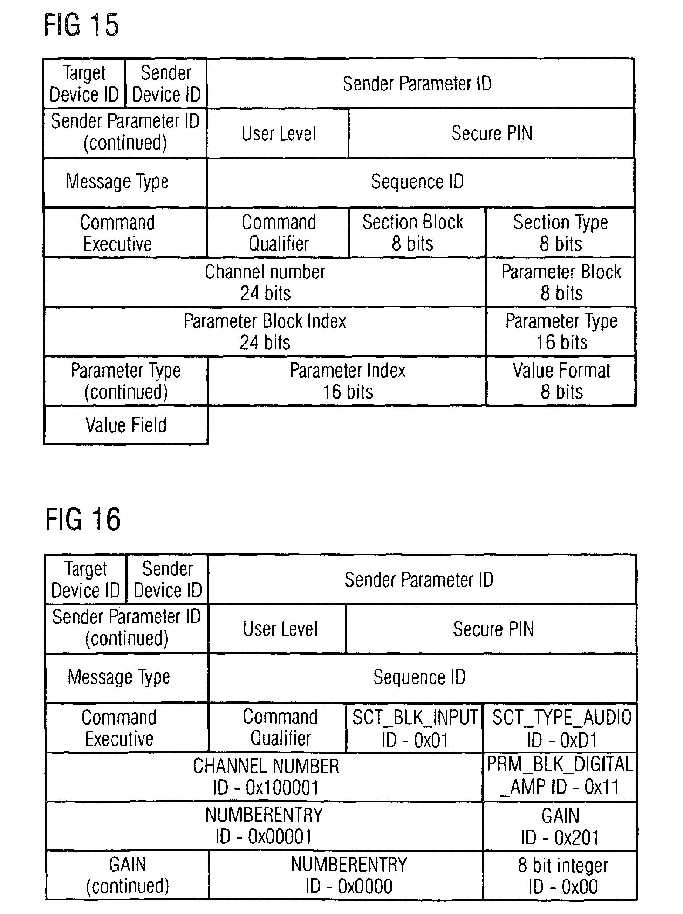

Fig. 15 shows the hierarchical parameter address block within a command and control message (CMD) in more detail.

The Value Format field provides an integer that indicates the type and length of the value in the Value field. The Value field does not form part of the hierarchical parameter address, but it follows the parameter address and can be of varying length according to the value in the Value format field of the hierarchical XFN parameter address.

In order to address a target parameter of an apparatus 5, every level within the hierarchical parameter address block is filled in with an identifier that indicates a particular predefined entity appropriate to that hierarchy level. For each parameter in an apparatus 5, a manufacturer can choose such at entity for each level of the hierarchy.

Figure 16 below shows an example of a command message CMD where the levels of the parameter address data block have been filled in with appropriate identifiers. The device parameter in this case is the gain for a channel on a mixing console.

In this example, the series of values that make up the address of the gain parameter are:
0x01
0xD1
0x100001
0x11
0x00001
0x201
0x0000

Whether the addressed device parameter is retrieved, set to 0x60, or some other action is performed, depends on the nature of the command message CMD as specified in the Command Executive and Command Qualifier fields of the header.

It may seem unnecessarily constraining to require that every device parameter conforms to a fixed N-level hierarchy of N levels, wherein N is e.g. seven. However, there are substantial benefits to knowing that every apparatus or device conforms to such a N-level hierarchy, where the assignment of identifiers at each level are consistent from device to device.

For example, a small controller device within a large network of complex apparatuses 5, such as mixing consoles can easily be used to control a particular parameter of a complex mixing console, for example gain levels on a particular input channel, by dialing in the appropriate N-level address (N = e.g. 7). Command (CMD) messages can then be transmitted to this hierarchical parameter address HPA requesting that the device parameter be modified. If the target device parameter does not exist, the mixing console apparatus 5 does not respond.

Control of device parameters is further enhanced in a possible embodiment by the 'wildcard' mechanism. In place of a device parameter at any level, there can be a wildcard. A wildcard identifier at any level can comprise e.g. a series of 1's. Thus, in the above example, the gains on all channels of a device can be modified by a single command message CMD if the command message CMD contains the following address:
Section Block - 0x01
Section Type - 0xD1
Channel Number - 0xFFFFFF (wildcard)
Parameter Block - 0x11
Parameter Block Index - 0x00001
Parameter Type - 0x201
Parameter Index - 0x0000

The wild card indicates that for the given section block and section type, the parameter with the given parameter block/parameter block index/parameter type/parameter index on every channel is to be modified.

It is possible for the wildcard mechanism to be used in conjunction with a broadcast IP address, thereby allowing for control over multiple devices. Thus in the above example, all gains on all channels of all apparatuses 5 in a network 1 can be controlled via a single command CMD message. It is also possible for a wildcard to appear at more than one level within a hierarchical address data block. Thus in the above example, if a wildcard is introduced at the section type level, then access to gain parameters can be widened to include all section types within the Input section block.

The wildcard mechanism can be used to have a wide ranging effect on a large number of device parameters within a network 1. However, it does depend on parameters that conform to a fixed level-based addressing scheme, a consistent grouping at each level, and the use of predefined identifiers for the groupings at each level.

Manufacturers can assign addresses to device parameters in a consistent fashion. There can be a substantial number of predetermined identifiers at the various levels. If these predetermined identifiers do not fulfil the addressing requirements of a device parameter, then a manufacturer can request additional identifiers.

It may well happen that a parameter address can be specified without utilizing all N-levels. This will particularly apply to simple devices that don't have complex hierarchical functional groupings. In this case, "dummy" values are placed in the unnecessary levels. For example, if there is only a single parameter of the "gain" type on a particular input channel of a mixing console, then the parameter index field can be filled with the value "1".

A device parameter can be created on a control device 3 and a command message CMD can be sent to a parameter of this control device 3, wherein the command message CMD is parsed and responded to.

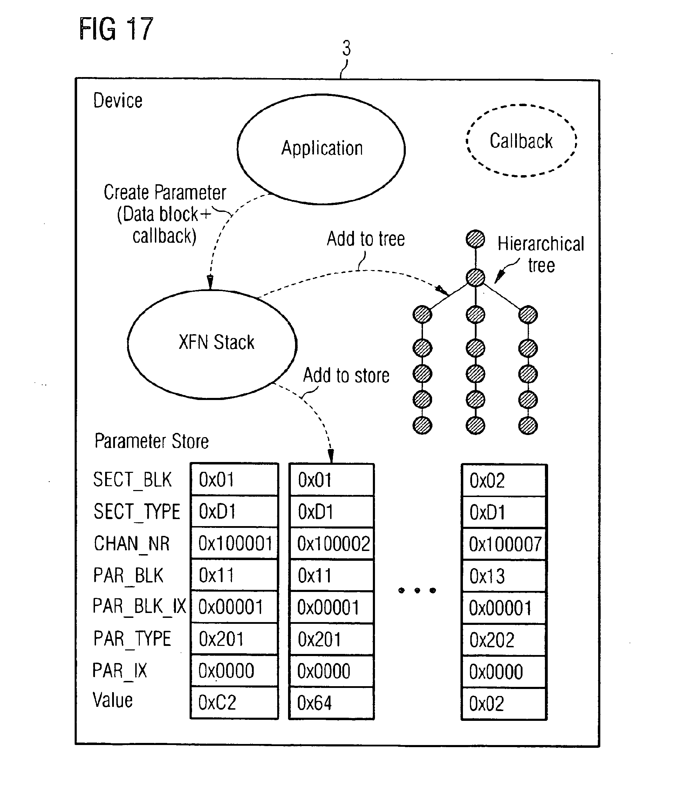

Fig. 17 provides a conceptual model for the creation of a device parameter on an XFN device 3 of the digital multimedia network of the present invention. As shown in the figure, each device comprises in a possible embodiment an application, an XFN stack with an associated hierarchical tree structure, and a parameter store containing all device parameters.

When the application starts up, it requests the XFN stack to create parameters by utilizing an XFN stack API. In this request is included the hierarchical address that completely describes the device parameter. There is also a pointer to a callback function that contains code to process the parameter request. The XFN stack incorporates this hierarchical parameter address HPA into the XFN tree by ensuring that there is a node in the tree for each identifier at each level. The XFN stack creates a parameter store entry for each device parameter, and at the bottom level of the tree stores a pointer to this device parameter as well as to the call back function.

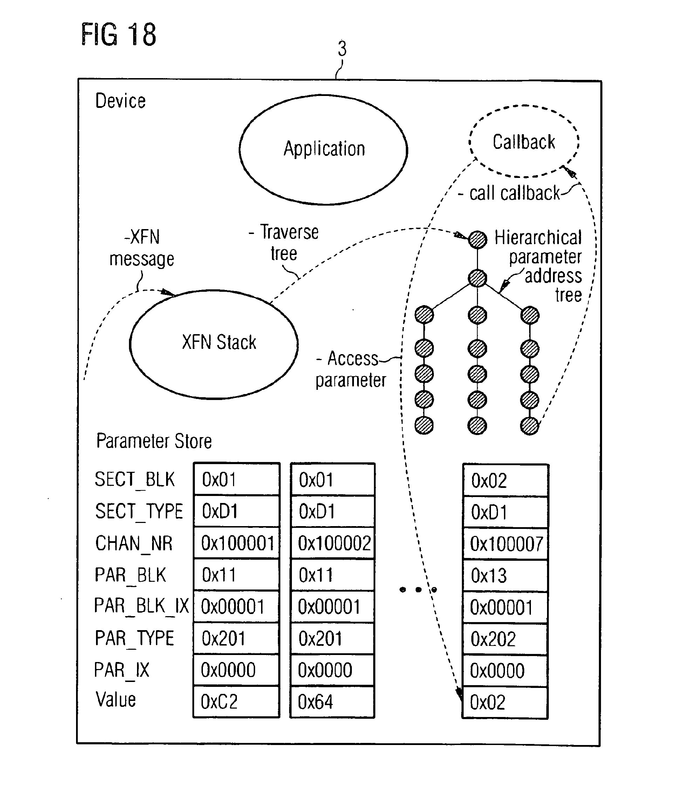

Fig. 18 shows conceptually how a command message (CMD) is processed by an XFN control device 3, and how this results in a parameter access. A command message (CMD) is received by the control device 3, and is passed to the XFN stack for processing. The XFN stack extracts the hierarchical parameter address data block (HPA) from the command message CMD, and uses the successive level identifiers of the data block to traverse the nodes of the hierarchical tree structure. At the appropriate leaf of the tree, the XFN stack finds a pointer to a callback function as well as a pointer to a device parameter. It calls the callback function, providing the parameter pointer. The callback function performs the required function on the device parameter in terms of the underlying host architecture.

In a possible embodiment, there are three fields within a command message CMD that indicate the type of command message CMD that is being transmitted. These are the Message Type, Command Executive, and Command Qualifier data fields. Every command message (CMD) is either a request sent from one control device 3 to another, or is a response from a control device 3 after a request has been made. Some command message requests require a response, while others don't. The request or response nature of the command message CMD is indicated within the Message Type field of the command message CMD. The nature of the request is indicated by the Command Executive and Command Qualifier fields.

Given below is a table 1 that describes possible command message CMD types.

**Table 1**

| Message Type Definitions | Value |
|---|---|
| Full Datablock with response | 0x00 |
| Full Datablock with no response | 0x01 |
| Indexed message with response | 0x02 |
| Indexed message with no response | 0x03 |
| Response message | 0x04 |

As can be seen from Table 1, there are two types of message requests - those that require a response, and those that don't. Command messages that don't require a response have no need for a Sequence ID field, since the Sequence ID field is used by a transmitter to identify which request message a response message applies to.

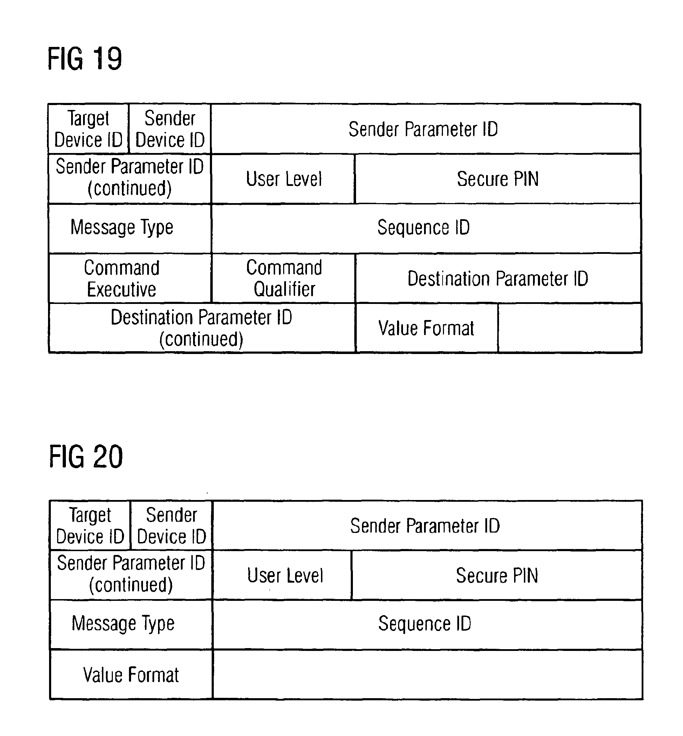

Furthermore, the device parameter being addressed in the request can be addressed with a full data block HPA, as shown in Figure 14, or with a parameter identifier (indexed message). A parameter identifier is an integer value that uniquely identifies a parameter within a device. Figure 19 shows the format of an indexed command message CMD.

The parameter address data block HPA is replaced in the indexed command message format by a destination parameter ID of e.g. 32 bits. Addressing of the targeted device parameter on a destination device is then performed via a unique parameter ID. All other data fields of the command message CMD are the same.

For every command message request, there is a response from the recipient of the request. The response message is the same, regardless of whether the request comprises a full hierarchical parameter address data block HPA or a parameter ID. A possible format of a response message is shown in Fig. 20. The Sequence ID allows the control device 3 that transmitted the request to determine which request the response belongs to.

As indicated previously, every command message (CMD) contains a command together with an indication (via the data block or a parameter ID) of the device parameter or group of device parameters that the command message CMD relates to. Each device parameter can have a number of attributes such as its value, its state (identified by flags), its name, etc. The command executive component of a command message CMD indicates the fundamental nature of the command (get, set, etc.), while the command qualifier allows the command executive to be directed at a particular attribute of a device parameter, or a particular grouping of parameters (such as a selection group).

Given below in Table 2 is a list of possible command executives within the header of a command message CMD together with a brief explanation of their respective functions.

**Table 2**

| Byte 1 [HEX] | Command | Short explanation |
|---|---|---|
| 00 | GET | GET VALUE |
| 01 | SET | SET VALUE |
| 02 | ACT | PERFORM ACTION |
| 03 | SYST | SYSTEM COMMAND |

The GET command executive requests to get a value from a device parameter.

The SET command executive requests to set the value of a device parameter.

The ACT command executive causes an action to be performed on a device parameter, such as making it part of a parameter group.

A SYST command executive can be used when a non-parameter related system function needs to be performed.

Table 3 below shows a possible range of command qualifiers that can be coupled with command executives.

**Table 3**

| Command qualifier | Description |
|---|---|
| VALUE | Refers to the parameter's value |
| USER ACCESS | Refers to a parameter's user access level |
| PUSH | Refers to the Push properties of a parameter |
| FLAGS | Refers to the various flags of a device |
| DEFAULT | Refers to the default values of a parameter |
| NAME | Refers to the name of a parameter/level |
| VALUE TABLE | Refers to the value names of a parameter |
| ADDRESS MODIFIER | Refers to the address modifier's address specifier list |
| VALUE MODIFIER | Refers to the value modifier's specifier |
| ID | Refers to the identification data for a parameter |
| SNAPSHOT | Refers to a snapshot of a device's parameters |
| PARAMETER GROUP LIST | Refers to parameters within a group |
| GROUP VALUE | Refers to a value that is set but not forwarded |
| SELECT | Refers to the selection group |

Given below are brief explanations of how the above command qualifiers listed in Table 3 can 'qualify' a command executive such as a GET or SET.

VALUE: This is straightforward and causes the GET and SET command executives to get or set the value of the addressed device parameter. The VALFT field of the data block determine the size and type of the value.

USER ACCESS: There can be, for example, up to 256 user levels lists. Each entry in a user level list contains a flags entry which indicates parameter access capabilities for that user level. Each device parameter contains a value that indicates the list from which its access capabilities can be derived. If a parameter request comes from the outside with a particular user level, then the parameter list and the user level are used to access a particular flags value, which in turn indicates if the parameter request can be fulfilled. This command qualifier can cause a GET or SET command executive to get or set a parameter's list identifier.

PUSH: A device parameter can be set to 'Push mode' by setting the appropriate 'PUSH' flag. In this mode, whenever the device parameter is modified, it transmits a command message CMD containing its current value and using a SET VALUE command. By default, the parameter's own parameter address data block HPA can be broadcasted to all control devices 3. However, the parameter address data block HPA containing the hierarchical address to which the command message (CMD) is directed, and also the particular control device 3 can be set by using the PUSH command qualifier.

FLAGS: Each device parameter can have a number of flags associated with it. The flags indicate, for example, whether the device parameter can be written to, whether it has security enabled, etc. This command qualifier allows a parameter's flags attribute to be read from or written to.

DEFAULT: Each device parameter can have a default value. This command qualifier allows the default value of a device parameter to be accessed or set to a particular value.

NAME: Each device parameter can have a meaningful name associated with it as a character string. This command qualifier allows for this name to be read or set.

VALUE TABLE: For display purposes, it is possible to display every value that a device parameter can take on as a meaningful character string. For example, if there is a graphical representation of a slider, and the slider controls a gain parameter, then there can be decibel indicators on this slider. This command qualifier allows one to obtain such a list of meaningful character strings from a device parameter.

ADDRESS MODIFIER: There are two types of modifier capability that a modifier parameter block can have, value modifiers and address modifiers. A value modifier modifies the Value field of the command message CMD sent to a modifier input parameter, while an address modifier modifies one or more of the address levels of a command message CMD sent from a modifier output parameter. This command qualifier allows for specification of scripts that can be applied to each level of the parameter address data block HPA of a transmitted command message CMD.

VALUE MODIFIER: This command qualifier allows for the specification of a script that can be applied to the Value field of a command message CMD that is sent to the modifier input parameter.

ID: As indicated previously, each device parameter has a unique ID associated with it. This command qualifier allows this ID to be obtained via a GET command executive.

SNAPSHOT: This command qualifier enables a snapshot of all device parameters to be retrieved via a single GET command executive.

PARAMETER GROUP LIST: Every device parameter can be grouped into a parameter group list PGL. This command qualifier allows for the retrieval of a parameter group list from a particular parameter, as well as the setting of a group list to a parameter. GROUP VALUE: This command qualifier enables a parameter of a parameter group list PGL to be modified without influencing other device parameters in the device parameter group. SELECT: Within a control device 3, it is possible to have a single SEL (selected) group. A flag indicates whether a device parameter is part of the SEL group. This command qualifier can be part of a command message CMD with a GET command executive, and can be directed at a particular device. It causes then the device 3 to return a list of the parameter address data blocks of all device parameters with their SEL flag set.

Each device parameter can have a number of flags associated with it as indicated in Table 4. These flags indicate various states that the device parameter can occupy. A flag can be assigned a single bit within a 32 bit Flags register. This bit can be either 0 or 1, indicating that the flag is either not set or set, respectively. The Flags register can be accessed and modified by using a FLAGS command qualifier.

**Table 4**

| BIT COUNT | Function |
|---|---|
| 0 | SEL |
| 1 | ALERT |
| 2 | READ |
| 3 | WRITE |
| 4 | VALUE PROTECT |
| 5 | VALUE TABLE PROTECT |
| 6 | VALUE MODIFIER PROTECT |
| 7 | ADDRESS MODIFIER PROTECT |
| 8 | HIDE |
| 9 | PUSH |
| 11 | SECURITY ENABLED |
| 12 | WHITELIST ENABLED |
| 13 | BLACKLIST ENABLED |
| 14 | ISOLATE |
| 15 | VALUE MODIFIER BYPASS |
| 16 | ADDRESS MODIFIER BYPASS |

Given below are descriptions of the role played by each of the flags:
SEL : Any parameter in a control device 3 can be made part of a single "selection" group. The SELECT command qualifier can be used to access the device parameters of the selection group. For example a SET SELECT command can be used to set all the device parameters of the selection group to a particular value. The GET SELECT command can be used to get all the selection group parameters, that is, the hierarchical parameter address data blocks HPA of all the parameters of the selection group.
ALERT: The ALERT flag is set when a device parameter fulfills a particular critical condition, such as a temperature value on an amp that is inordinately high. As with all the flags, a parameter's ALERT flag can be polled via the GET FLAGS command.
READ: The READ flag indicates whether a device parameter can be read or not.
WRITE: The WRITE flag indicates whether a device parameter can be written to or not.
VALUE PROTECT: The VALUE PROTECT flag indicates whether the value of a device parameter can be overwritten via a snapshot.
VALUE TABLE PROTECT: The VALUE TABLE PROTECT flag indicates whether the value table of a device parameter can be overwritten via a snapshot.
VALUE MODIFIER PROTECT: The VALUE MODIFIER PROTECT flag indicates whether a value modifier can be overwritten by a snapshot.
ADDRESS MODIFIER PROTECT: The ADDRESS MODIFIER PROTECT flag indicates whether an address modifier can be overwritten by a snapshot.
HIDE: If a device parameter is hidden, then it will not be accessible for enumeration by a controller. The HIDE flag causes a device parameter to be hidden or accessible.
PUSH: When a device parameter's PUSH flag is set, then whenever the device parameter is modified, it transmits a command message CMD containing its current value and using a SET VALUE command. By default, the parameter's own parameter data block is broadcasted to all devices 3. However, the hierarchical parameter address data block HPA containing the hierarchical address to which the command message CMD is directed, and also the particular device can be set by using the PUSH command qualifier.
SECURITY ENABLED: If a device parameter has its SECURITY ENABLED flag set, then it scans the User Level field of a command message CDM addressed to it, and responds to the message's command according to the flag settings that it holds for that user level. For example, if the command message's User Level is 45, and the parameter's flag settings for that User Level indicated that a write is not possible, then the command message CMD is ignored.
WHITELIST ENABLED: From the perspective of a control device 3, outside devices can be perceived to be on a white list (desirable to receive communication from) or a black list (undesirable to receive communication from). A control device 3 may actually hold a white list of the IP addresses and Device ID's of desirable devices, and a corresponding black list of undesirable devices. If a parameter's WHITELIST ENABLED flag is set to 1, then it only responds to command messages CMD from devices 3 that are on the white list.
BLACKLIST ENABLED: If a parameter's BLACKLIST ENABLED flag is set to 1, then it does not respond to control devices 3 on the black list.
ISOLATE: This flag, if set causes the device parameter to be isolated from a group. It does not respond to any group set commands.

As certain device parameters within a network 1 according to the present invention are logically related or associated a mechanism is required to define this relationship. This is achieved by grouping or joining these device parameters into logical clusters, also called join groups.

Two possible types of join groups can be provided:
- Master-slave Join Group - in a master-slave join group parameter change notifications are only sent in a single direction which is from a master parameter to all other device parameters that are included as part of this group;
- Peer-to-peer Join Group - a peer-to-peer join group allows device parameters within a group to send parameter value change notifications to all other device parameters that are members of the group.

Join parameter groups are further defined to be either absolute or relative. An absolute grouping forces all device parameters to take on the same value as the device parameter that is sending out the parameter value change notification. In a peer-to-peer group for example, this ensures that all device parameters within the group are synchronised to the same value. A relative grouping allows device parameters to retain their relative offsets between device parameters based on their offsets when the group is formed.

Every device parameter can be provided with the capacity to maintain the following join group lists:
- Master List - a list of all device parameters that act as a master over this device parameter
- Slave List - a list of slave parameters that are controlled by this device parameter
- Peer-to-peer List - a list of peer-to-peer parameters that require notification about changes to the value of this parameter and that send notifications to this parameter should their value change.

With each node holding the above three list types it is possible to provide for the cascading of groups where a device parameter can act both as a slave, a master and a peer simultaneously. Cascading of groups is important as it provides for a master-grandmaster relationship.

The establishment of parameter groups is through the use of a series of Get and Set commands CMD. A peer-to-peer group between a device parameter A and a device parameter B can, for example, be setup as follows:
- a parameter A requests the current peer-to-peer list from device parameter B,
- parameter B is currently not joined to any other parameter therefore the data returned contains only the current value of B and an indication that the only parameter currently on parameter B's join list is parameter B itself,
- parameter A builds an updated peer-to-peer list containing parameter A and parameter B. In building this list Parameter A calculates delta or offset values for each entry contained within the list. These offset values are used to maintain the relative relationship between device parameters in a relative join group. The calculation of this offset value can be performed as follows:
- (Current value of parameter sending the join list + offset indicated within the join list) - current value of parameter processing the request;
- associated with each group list is a flag indicating if the group is a relative or absolute group. The offset value is only utilised for relative groupings,
- parameter A sends a set group list command to parameter B with the actual group list,
- parameter B calculates the delta values relative to its current local value and sets up its peer-to-peer group list accordingly.

A master-slave group is formed in a similar manner to the peer-to-peer group, with the exception that a master parameter is required to become a master to all nodes within the peer-to-peer group of its slaves. This is required to ensure that the relationships within the peer-to-peer group remain consistent.

It is possible that connections between device parameters that are grouped can become broken or temporarily unavailable. A break in a parameter group can be detected through the failure of a device parameter to respond to a set request as a result of a parameter change. If a device parameter is found to be offline it is tagged as such within the parameter group list PGL. While the parameter group is broken device parameters are likely to be modified independently of the group and a mechanism is provided that allows the parameter groups to resynchronise when the link is reestablished. If a device parameter that was previously flagged as offline within the parameter group list PGL is now available, a group resynchronization is required. This is done by requesting the parameter group list PGL from the device parameter that was offline and comparing the values within the parameter group list PGL, to the values within the local parameter. Any discrepancies between these lists result in the establishment of another parameter group list PGL that is then set to all nodes within the parameter group list PGL. The value that is applied to the parameter group after the group is resynchronized is the value of the device parameter that was responsible for initiating the resynchronization of the parameter group lists PGL.

As indicated in previous sections, a device parameter's value can be changed via a 'SET VALUE' command that is sent to it from a second device parameter in the 'PUSH' state. A parameter's value can also be changed via a 'SET GROUP VALUE' command when it is part of a parameter group, and the value of one of the group members is modified.

There are instances where the values sent from one device parameter to another device parameter need to be modified. For example in the case where two faders need to have an inverse relationship. In this case it is useful to join the two device parameters, but also to modify the values sent between the two device parameters such that the values are inverted.

There are also instances where the hierarchical address data blocks HPA contained within command messages CMD pushed from a device parameter need to be modified. For example in the case where a small controller device with a limited number of faders is required to control the gains on a large multi-channel mixing console. In this case it is useful to be able to quickly modify the channel numbers of the hierarchical address data blocks that are pushed out by the faders. This allows the faders to control gains on any of the channels of the mixing console.

In order to enable these modification capabilities, the hierarchical protocol as employed by the present invention incorporates a 'Modifier' mechanism.

The control protocol as employed by the invention allows for the creation of 'Modifier Blocks'. A Modifier block comprises a group of device parameters that together provide complete modifier functionality. Every modifier parameter block MPB can have the following device parameters:
- Input Value Parameter (IVP)
- Output Value Parameter (OVP)
- Value script variable parameter (VVP)
- Data block level 1 script variable parameter (L1VP)
- Data block level 2 script variable parameter (L2VP)
- Data Block level 3 script variable parameter (L3VP)
- Data block level 4 script variable parameter (L4VP)
- Data block level 5 script variable parameter (L5VP)
- Data block level 6 script variable parameter (L6VP)
- Data block level 7 script variable parameter (L7VP)

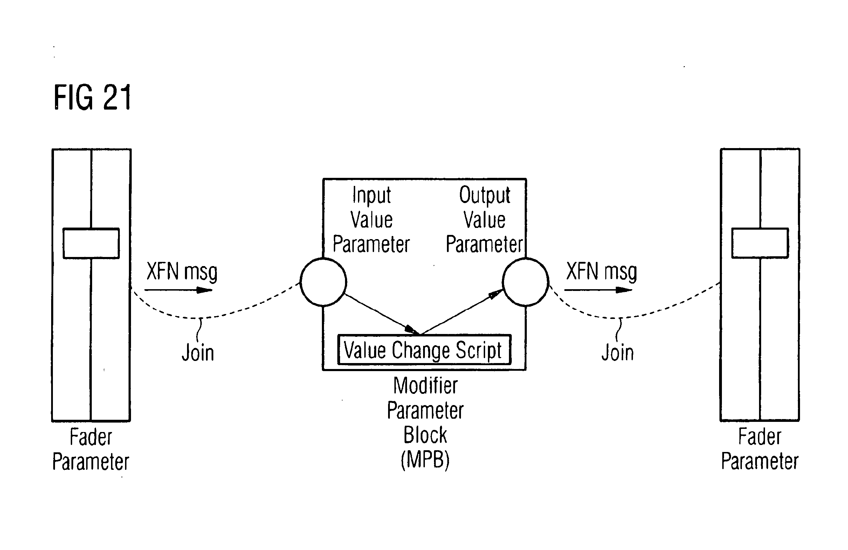

Fig. 21 shows how a Modifier Parameter Block MPB can be used to modify the Value field of a command message CMD sent by one member of a parameter group to another. It also indicates the roles played by two of the device parameters of this Modifier Parameter Block MPB, the Input Value Parameter and the Output Value Parameter.

The Fader parameter on the left side of the figure is joined to the Input Value Parameter IVP of the Modifier Parameter Block MPB. When the fader is adjusted, a SET GROUP VALUE message is sent to the IPV. When IPV receives the parameter message it causes the Value Change Script to process the value and create a modified value. This modified value updates the value of the Output Value Parameter OVP.

The OPV is joined to a different fader parameter on the right side of Fig. 21. When the OVP parameter's value changes, it sends a SET GROUP VALUE message to the fader parameter, with the value that was modified by the Value Change Script.

As an example, if there an inverse relationship between the two faders as configured, then the Value Change Script can be of the form: ValueOPV = MaxValue - ValueIPV.

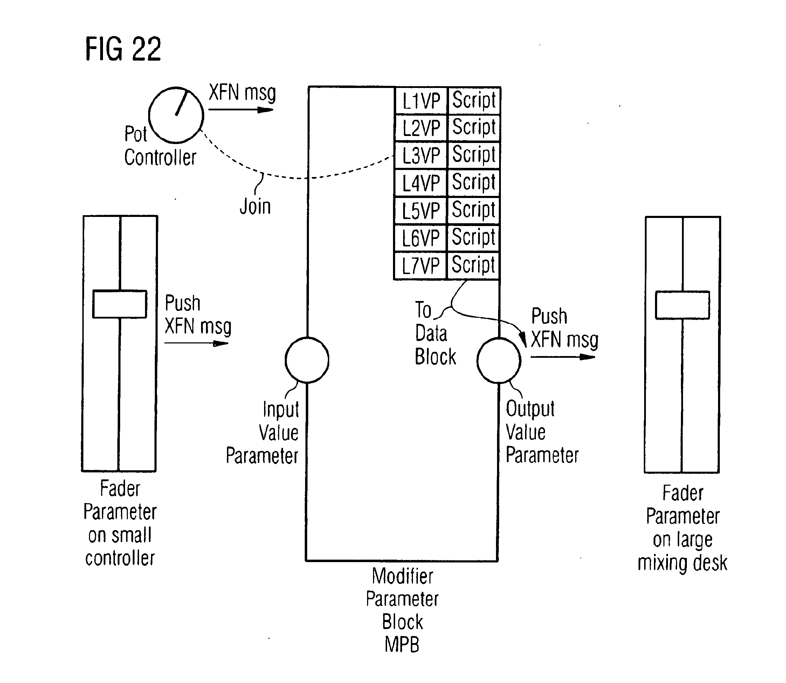

Fig. 22 below shows how a Modifier Parameter Block MPB can be used to modify the hierarchical address data block of a command CMD that is pushed from one device parameter to another.

In Fig. 22, a Fader parameter on the left is put into the "PUSH" state, and the device parameter to be pushed to is specified as the IVP of the Modifier Parameter Block MPB. In a similar fashion, the OVP is set to the "PUSH" state, and the device parameter to be pushed to can been specified as the Fader parameter on the right hand side of Fig. 22.

At the top right of the Modifier Parameter Block MPB are a series of level variable parameters and associated scripts. Each script indicates processing that must occur on the identifier at that level. This processing can modify the nature of the hierarchical parameter address data block MPA that is incorporated into the parameter pushed from the OVP, and hence indicate a device parameter to be targeted.

Each level script may incorporate a variable. For example a level 3 (Channel Number) script can indicate: Level3ID = Levcl3ID + L3VP. This adds the value of the L3VP variable to the current ID value. In this example, such a modification causes a mixing desk Fader parameter on a different channel to be addressed and its value changed.

It is further possible to have controllers exert control over the values of the various variables. This is shown in the upper left of Fig. 22, where a Pot controller parameter is joined to the L3VP variable parameter. When the Pot is adjusted, L3VP's value is changed, and the script evaluates another value.

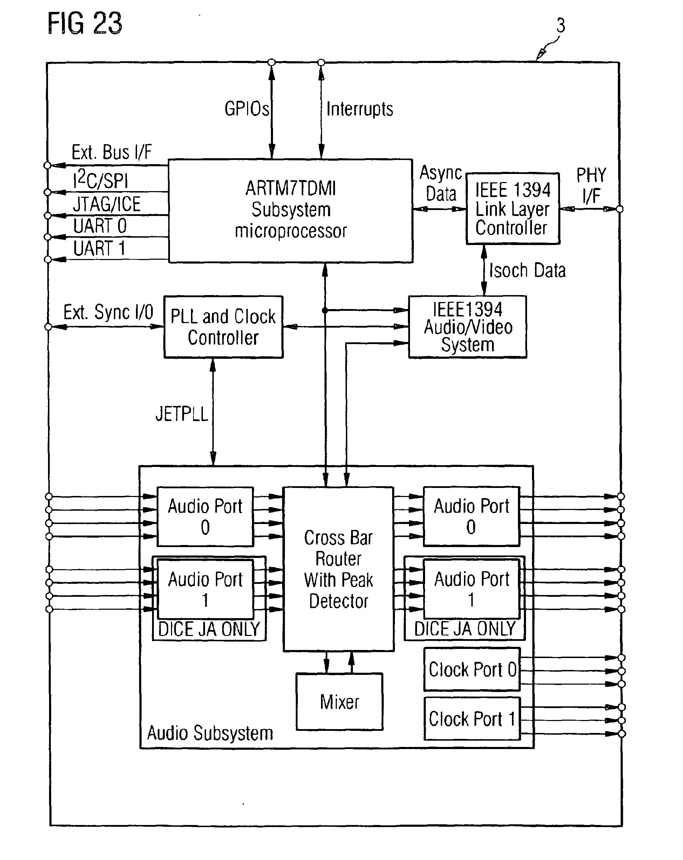

Fig. 23 shows an example of a control device 3 as employed by the digital multimedia network 1 of the present invention, the so called evaluation box. Device parameters can be assigned to the various capabilities that this device provides. The shown evaluation box 3 incorporates an audio subsystem.

As can be seen from Fig. 23, there is a processor e.g. an ARM processor that can pick up asynchronous packets from a 1394 link layer controller within the audio subsystem. The ARM processor has control over a cross bar router and mixer that lie within the audio sub system. The ARM processor executes in a possible embodiment an XFN stack according to the hierarchical command and address protocol.

The audio subsystem of the control device 3 can receive an audio data via two audio ports, and can transmit this audio data to two output ports. The audio input ports and the audio output ports each can have e.g. 4 data lines. The data lines of the audio input ports can be routed, via configuration registers, to AES, ADAT, ARM, AVS (Audio/Video System), or InS source interface blocks. The data lines of the audio output interfaces can be configured to receive from AES, ADAT, AVS, or InS destination interface blocks. A possible Source block ID table is given in Table 5:

**Table 5**

| Block ID | Block Description | Number of channels |
|---|---|---|
| 0 | AES | 8 |
| 1 | ADAT | 16 |
| 2 | MixerRX | 16 |
| 3 | Reserved | N/A |
| 4 | INS0 | 16 |
| 5 | INS1 | 16 |
| 6 | Reserved | N/A |
| 7 | Reserved | N/A |
| 8 | Reserved | N/A |
| 9 | Reserved | N/A |
| 20 | ARM APB Audio | 8 |
| 11 | AVS-0 | 16 |
| 12 | AVS-1 | 16 |
| 13 | Reserved | N/A |
| 14 | Reserved | N/A |
| 15 | Reserved | N/A |

Analogue to digital converters on the boards can be connected to data lines, which are in turn connected to the INS0 and INS1 blocks. The AVS-0 and AVS-1 blocks are the blocks that receive isochronous streams. Thus two isochronous data streams can be received by the audio subsystem shown in Fig. 23. The mixer block refers to 16 output channels of a mixer, which can be routed to destinations.

Table 6 below shows possible destination block ID's.

**Table 6**

| Block ID | Block Description | Number of channels |
|---|---|---|
| 0 | AES | 8 |
| 1 | ADAT | 16 |
| 2 | Mixer TX0 | 16 |
| 3 | Mixer TX1 | 2 |
| 4 | INS0 | 16 |
| 5 | INS1 | 16 |
| 6 | Reserved | N/A |
| 7 | Reserved | N/A |
| 8 | Reserved | N/A |
| 9 | Reserved | N/A |
| 10 | ARM APB Audio | 8 |
| 11 | AVS-0 | 16 |
| 12 | AVS-1 | 16 |
| 13 | Reserved | N/A |
| 14 | Reserved | N/A |
| 15 | Reserved | N/A |

Note that the outputs from the INS0 and INS 1 source blocks can be connected to Audio Output data lines, and that these data lines can in turn be connected to digital to analogue converters. The Mixer TX0 and Mixer TX1 source blocks incorporate the input channels of the mixer. Source channels can be connected to these mixer inputs. AVS-0 and AVS-1 refer to the two output isochronous streams. Source channels can be routed to these isochronous stream channels and in this way can be transmitted across the Firewire bus.

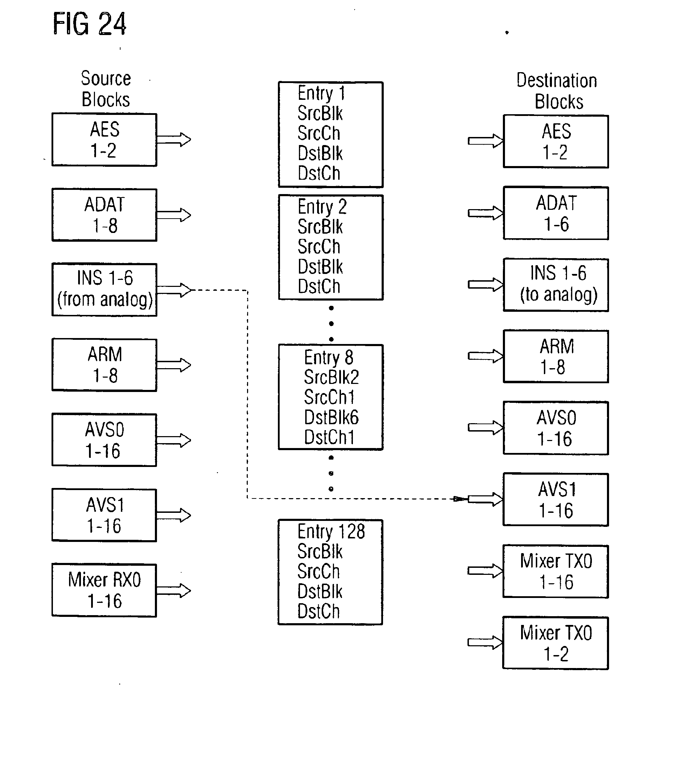

The evaluation box device 3 shown in Fig. 23 contains 6 analogue inputs, 8 analogue outputs, an ADAT input and ADAT output, and an AES input and output. An abstract view of the router as applied to the evaluation box is shown in Fig. 24.

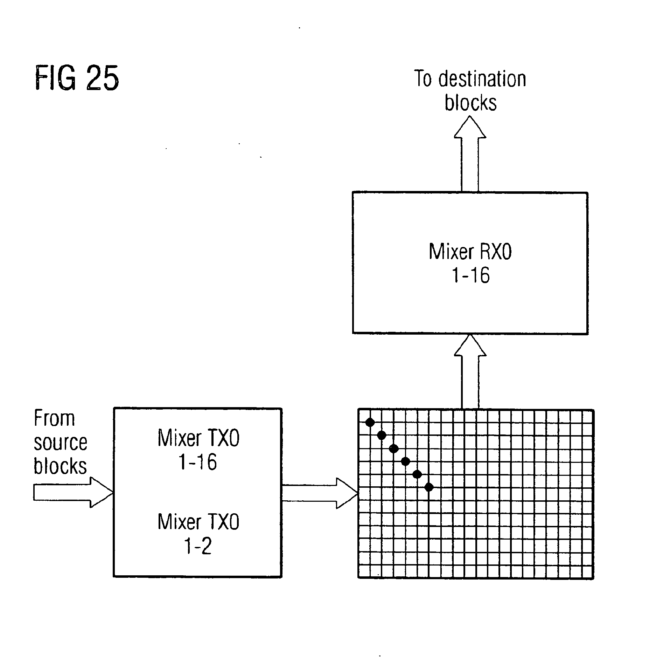

Each router entry register holds a 16 bit value that contains e.g. 4 bit source block and source channel values that identify a particular source channel, and 4 bit destination block and destination channel values that identify a particular destination channel. In this way 128 routings can be specified. Channels that form part of the mixer TX0 and mixer TX1 source block can be routed to a mixer matrix as shown in Fig. 25.

The cross points of this mixer matrix have coefficients associated with them, and these coefficients indicate mix levels. The coefficients can be controlled via registers of the audio subsystem. In the evaluation box shown in Fig. 23, a first version of firmware simply uses the mixer capabilities to provide gains for the 6 analog inputs. To this end the 6 channels of the INS block are routed to the first 6 channels of the Mixer TX0. The first 6 channels of Mixer RX0 can be routed to any destination channels as if they were the 6 analog inputs with gains applied. Gain control is obtained by adjusting the cross point coefficients for (1,1), (2,2), (3,3), (4,4), (5,5), (6,6).

The audio subsystem contains two independent AVS (Audio/Video System) audio receivers each capable of extracting e.g. 16 channels of audio and e.g. 8 MIDI plugs. It can also contain two independent AVS audio transmitters capable of transmitting e.g. 16 channels of audio and 8 MIDI plugs. The formatting of audio and MIDI data can follow the IEC 61883-6 specification.

In IEEE1394 (Firewire) terms, an isochronous stream transmits on a particular channel (0-63) and comprises a number of data sequences, where each of these data sequences can carry audio or MIDI data.

Each AVS receiver can be configured to receive on any one of 63 isochronous channels. It can also be configured to receive a number of audio channels that is less than 16. Each AVS transmitter can be configured to transmit on any one of 63 isochronous channels. It can also be configured to transmit a number of audio channels that is less than 16.

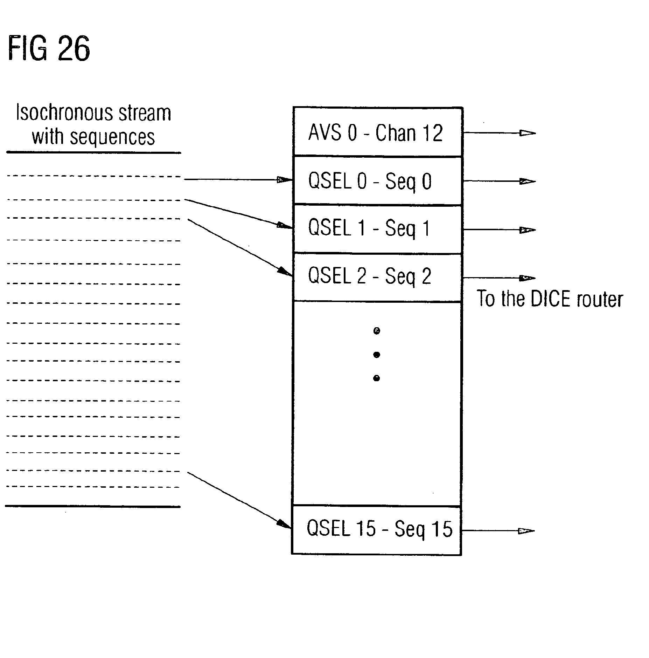

Each AVS receiver can have registers that indicate e.g. 17 QSEL slots. Each of these QSEL slots can cause the selection of one of 256 sequences in an incoming isochronous stream. This capability is shown in Fig. 26.

With regard to the evaluation boxes, the QSEL slots are set up such that they extract the successive sequences 0 - 15, as shown in Fig. 26. Routing to appropriate outputs then takes place within the router.

In order to use the hierarchical command and control protocol to control the routing and mixing capabilities, these capabilities are mapped to hierarchical parameter structures. Device parameters that reflect the capabilities of the audio subsystem are then created in a possible embodiment by a firmware application.

Various data block level identifiers can be used for controlling the capabilities of the cross bar router. Isochronous streams that are received by AVS receivers referred to as "multicores". This term reflects their fundamental nature in sound engineering terms - a bundle of cables (the sequences). The end points of audio sequences within the isochronous streams are referred to as "audio pins", to reflect the sense of pins in an audio socket onto which individual cables (the sequences) connect.

Table 7 shows possible hierarchical addresses for each of the device parameters that control multicores connected to the input of a device.

**Table 7**

| Level Name | No of Input channels received by AVS receiver | Isoch channel no for AVS receiver | Running state of AVS receiver | Locked state of AVS receiver | Nominal SFC of AVS receiver |
|---|---|---|---|---|---|
| Section Block | SCT_BLOCK _ INPUT | SCT_BLOCK _ INPUT | SCT_BLOCK_ INPUT | SCT_BLOCK _ INPUT | SCT_BLOCK _ INPUT |
| Section Type | SCT_TYPE_1394 | SCT_TYPE_1394 | SCT_TYPE_1394 | SCT_TYPE_1394 | SCT_TYPE_ 1394 |
| Channel Number | 0x01 | 0x01 | 0x01 | 0x01 | 0x01 |
| Parameter Block | PRM_BLOCK _ MULTICORE | PRM_BLOCK_ MULTICORE | PRM_BLOCK _ MULTICORE | PRM_BLOCK_ MULTICORE | PRM_BLOCK MULTICORE |
| Param Block Index | 0x01-0x02 | 0x01-0x02 | 0x01-0x02 | 0x01-0x02 | 0x01-0x02 |
| Parameter Type | PTYPE_ACTIVE_ AUDIO_PINS | PTYPE_ISOCH_ CHANNEL_ NUM | PTYPE_ RUNNING_STATE | TYPE-LOCKED_STATE | PTYPE_ NOMINAL_ SFC |
| Parameter Index | 0x01 | 0x01 | 0x01 | 0x01 | 0x01 |

In order, from left to right in Table 7 it is evident that:
- the number of active pins on an input socket (AVS Receiver) can be determined;
- the channel number of the multicore (channel in header of stream packets) can be determined;
- the running state of a multicore can be determined i.e. is it receiving an audio stream or not. The running state can be set;
- the locked state of a multicore can be determined i.e. whether it is capable of receiving a stream or not;
- the nominal sampling frequency of audio being carried by the multicore can be determined or set;

Both the Channel Number and Parameter Index levels can have dummy values in the case of these parameters. A similar table for the AVS transmitters can be drawn up which are modeled in XFN terms as multicores (isochronous streams) leading from the device, where each multicore has a number of cables (sequences) attached to pins on the output of a device.

Table 8 below shows a table for possible datablocks specific to AVS transmitters.

**Table 8**

| Level Name | No of Input channels transmitted by AVS transmitter | Isoch channel no for AVS transmitter | Running state of AVS transmitter | Locked state of AVS transmitter | Nominal SFC of AVS transmitter |
|---|---|---|---|---|---|
| Section Block | SCT_ BLOCK _ OUTPUT | SCT_BLOCK _ OUTPUT | SCT_BLOCK_ OUTPUT | SCT_BLOCK _ OUTPUT | SCT_BLOCK _ OUTPUT |
| Section Type | SCT_TYPE_1394 | SCT_TYPE_1394 | SCT_TYPE_1394 | SCT_TYPE_1394 | SCT_TYPE_ 1394 |
| Channel Number | 0x01 | 0x01 | 0x01 | 0x01 | 0x01 |
| Parameter Block | PRM_BLOCK _ MULTICORE | PRM_BLOCK_ MULTICORE | PRM_BLOCK _ MULTICORE | PRM_BLOCK_ MULTICORE | PRM_BLOCK_ MULTICORE |
| Parameter Block Index | 0x01-0x02 | 0x01-0x02 | 0x01-0x02 | 0x01-0x02 | 0x01-0x02 |
| Parameter Type | PTYPE_ACTIVE_ AUDIO_PINS | PTYPE_ISOCH_ CHANNEL_ NUM | PTYPE_ RUNNING_STATE | PTYPE_ LOCKED_STATE | PTYPE_ NOMINAL_ SFC |
| Parameter Index | 0x01 | 0x01 | 0x01 | 0x01 | 0x01 |

As for the input multicore control, from left to right in Table 8 it is evident that:
- the number of active pins on an output socket (AVS Transmitter) can be determined;
- the channel number of the multicore (channel in header of stream packets) can be determined;
- the running state of a multicore can be determined i.e. is it transmitting an audio stream or not. The running state can be set;
- the locked state of a multicore can be determined i.e. whether it is capable of transmitting a stream or not;
- the nominal sampling frequency of audio being carried by the multicore can be determined or set.

As for the input multicore table, both the Channel Number and Parameter Index levels can have dummy values in the case of these parameters.

The selection of sequences from isochronous channels by the QSEL slots are modeled by the attachment of cables within multicores to pins within the 'sockets' that the multicores connected to. This modeling is shown in Table 9 below:

**Table 9**

| Level Name | Cable attached to input Pin | Pin type | Cable attached to output pin | Pin type |
|---|---|---|---|---|
| Section Block | SCT_BLK_INPUT | SCT_BLK_INPUT | SCT_BLK_OUTPUT | SCT_BLOCK_OUTPUT |
| Section Type | SCT_TYPE_1394 | SCT_TYPE_1394 | SCT_TYPE_1394 | SCT_TYPE_1394 |
| Channel Number | 0x01 | 0x01 | 0x01 | 0x01 |
| Parameter Block | PRM_BLOCK_ MULTICORE | PRM_BLOCK_ MULTICORE | PRM_BLOCK_ MULTICORE | PRM_BLOCK_ MULTICORE |
| Param Block Index | 0x01 | 0x01 | 0x01 | 0x01 |
| Parameter Type | CABLE_ID | PIN_TYPE | CABLE_ID | PIN_TYPE |
| Parameter Index | PIN_NUMBER | PIN_NUMBER | PIN_NUMBER | PIN_NUMBER |

The value field for the CABLE_ID parameter type indicates the sequence number (cable) within the isochronous stream (multicore). The PIN_TYPE field can contain a 0 (audio) or 1 (MIDI) indicator. The PIN_NUMBER parameter index indicates the output from an AVS in the case of a receiver, or the input to an AVS in the case of an AVS transmitter.

A modelling of router and mixer capabilities within the audio subsystem of the control device 3 shown in Fig. 23 is performed as follows:

In table 10 below, a router is modelled as a matrix with input and output axes.

**Table 10**

| Level Name | Input axis pin name | Output axis pin name | Connected input pin |
|---|---|---|---|
| Section Block | SCT_BLK_MATRIX | SCT_BLK_MATRIX | SCT_BLOCK_MATRIX |
| Section Type | SCT_TYPE_1394 | SCT_TYPE_1394 | SCT_TYPE_1394 |
| Channel Number | 0×01 | 0x01 | 0x01 |
| Parameter Block | INPUT_AXIS | OUTPUT_AXIS | OUTPUT_AXIS |
| Param Block Index | 0x01 | 0x01 | 0x01 |
| Parameter Type | MATRIX_PIN_NAME | MATRIX_PIN_NAME | PATCH_INPUT_ID |
| Parameter Index | PIN_NUMBER | PIN_NUMBER | PIN_NUMBER |

Audio pins are arranged along both the input and output axes, and one of the properties of a pin is its name (MATRIX_PIN_NAME). A further property of an audio pin on the output axis is the ID of an input pin connected to it (PATCH_INPUT_ID). A connection can be made from a pin on the input axis to a pin on the output axis by sending a SET VALUE request to the PATCH_INPUT_ID parameter of the pin on the output axis. On the audio subsystem this results in the appropriate source block/channel and destination block/channel being written to an entry point of the router.

The model provides gain control over each of the analog inputs to the evaluation box. This gain control is implemented by connecting the 6 inputs of the INS source block (see Fig. 24) to the first 6 inputs of the mixer. The mixer coefficients that link each of these 6 inputs to the first 6 outputs of the mixer are used to implement the input gain levels.

Table 11 below shows the data blocks for each of the three device parameters that are associated with each of the 6 analog inputs to the equalization box device 3 shown in Fig. 23.

**Table 11**

| Level Name | Gain | Mute | Phantom Power |
|---|---|---|---|
| Section Block | SCT _BLK_INPUT | SCT_BLK_INPUT | SCT_BLOCK_INPUT |
| Section Type | SCT_TYPE_ANALOG | SCT_TYPE_ANALOG | SCT_TYPE_ANALOG |
| Channel Number | 0x100001 - 0x100006 | 0x100001 - 0x100006 | 0x100001 - 0x100006 |
| Parameter Block | PRM_BLK_DIGITAL_AMP | PRM_BLK_DIGITAL_AMP | PRM_BLK_DIGITAL_AMP |
| Param Block Index | 0x01 | 0x01 | 0x01 |
| Parameter Type | GAIN | MUTE | PHANTOM_POWER |
| Parameter Index | 0x01 | 0x01 | 0x01 |

A device 3 as used in the multimedia network 1 of the present invention is a hardware device that has a particular interface and follows the hierarchical control protocol (XFN) as employed by the present invention.

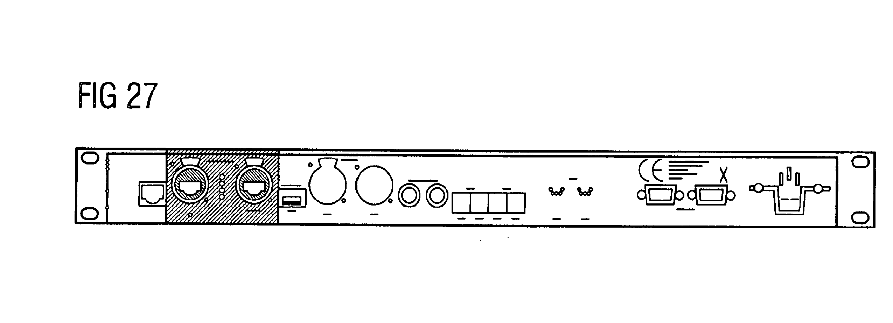

The particular so called UMAN interface is clearly marked as such. Fig. 27 shows a Type I interface on a breakout box.

Control devices 3 of the digital multimedia network 1 are connected together by either daisy chaining them (this is the preferred way of connecting the devices, if more than two devices are connected via daisy chain to a ring, the network 1 provides already a first level of redundancy for all devices) or alternatively in a star topology.

One of the centrepieces for the usability of the digital multimedia network 1 is the way how audio and video is connected throughout the system. The digital multimedia network 1 stays as close as possible to the analog model. This allows a user to perform his or her connections between control devices 3 as they were used to before.

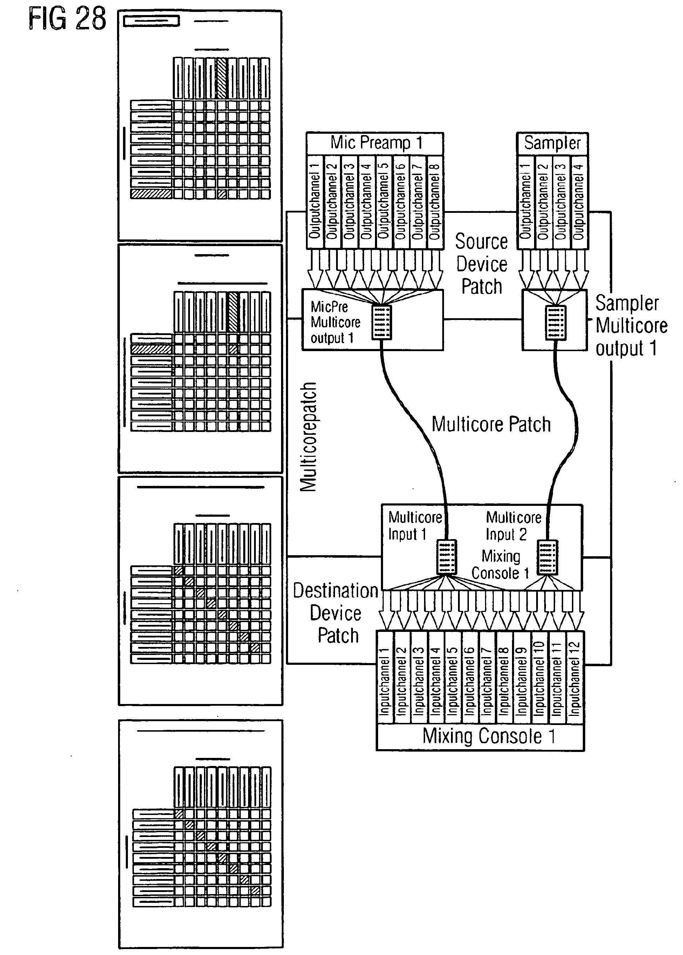

As shown in Fig. 28, first the user chooses the two control devices 3 he or she wants to connect to. This is done in the upper left window called Devices.

In a second step, the user patches the outputs of the source to the multicore slot.

In a third step, the user connects the multicore slot of the source to the multicore slot of the destination device.

In a fourth step, the user patches the outputs of the multicore slot to the inputs of the destination device. This is analogous to the way an audio connection between two devices would have been done in a "live" environment using one or several multicore(s).

With the hierarchical control protocol as employed by the digital multimedia network 1 of the present invention the simplicity of analog controlling, in contrast to most of other "digital approaches", is preserved by a controlling device that is able to provide the user with the necessary tools to work as he or she is used to. A number of generic controls are provided that are capable of controlling parameters on any devices within the network 1. It would be a severe disadvantage to be forced to have a controller for every device, whether it be a hardware or software control, and it would make control over a complex system more or less impossible.

The network 1 according to the present invention offers the possibility to use a single controller for every device parameter and every necessary logical operation throughout the network. This task is not provided by the controller alone, but certain logical operations are implemented within the control protocol itself and handled by its control devices 3 in order to be able to cope with a variety of possible setups and mix of different devices and ten- or hundreds of thousands of device parameters.

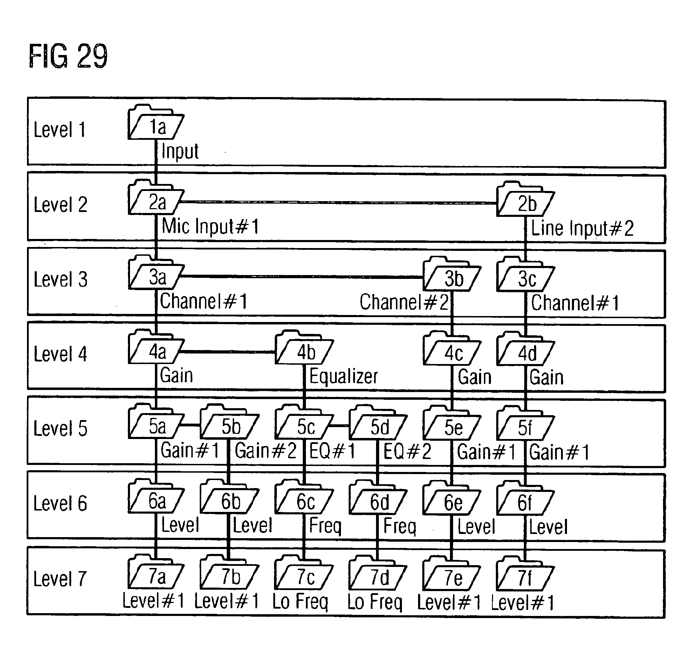

Any control device 3 used in the digital multimedia network 1 of the present invention can control many different device parameters of different apparatuses 5. The device parameters describe all functions of the corresponding apparatus and its interfaces. Fig. 29 shows a typical tree structure.

In order to describe device parameters properly the UMAN (XFN) control protocol uses a fixed level structure. This structure is entirely predefined and function specific, so a certain function of a control device 3 gets a certain address. Another control device 3 of the multimedia network 1 can now, even if it does not know the target device 3, ask for a specific function (e.g. a gain, an equalizer) and if the target device 3 has this function it will respond. Moreover, any control device 3 can use so called wildcards. These wildcards let a device discover any/some/all parameters of another device 3 within other apparatuses. In a remote control, all mechanical controllers like faders, pots, button displays meters etc. are parameters as well as those in e.g. a mixing console, an fx unit or a power amplifier. For example, a fader of a remote control can control the volume of a power amplifier. To do this, the user simply has to select both parameters and then join them.

In any command and control environment, when a parameter of an apparatus should be controlled, a relationship has to be established between a controlling device (such as a software editor, a hardware controller or any other means of control) and the controlled device parameter. The most common way in the (XFN) control protocol as employed by the digital multimedia network 1 of the present invention is to perform a so called "join" of those device parameters. A join connects device parameters together and makes them exchange data. A join operation always updates every joined parameter. A join can be absolute or relative as well as uni- or bidirectional. A join can hold an unlimited number of parameter group members each individually (absolute or relatively) joined. A join is remembered by every member, i.e. each device parameter of the parameter group, even when the connection is lost or a device is switched off. If one or more members of a joined parameter group are switched off or their devices lose connection the remaining group stays together and functional. A joined parameter updates itself after a connection loss to the proper value. Any parameter can be joined to any and as many as desired other parameter. The digital multimedia network 1 can hold an unlimited number of joined parameter groups.

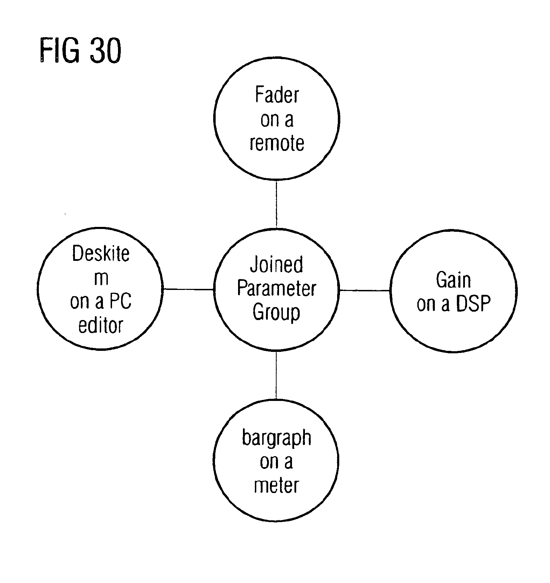

A typical example of a joined group of parameters is shown in Fig. 30.

In the digital multimedia network 1 there are no device specific software applications necessary (but of course still possible). As described before, everything within the network realm consists of device parameters. In order to simply the control of these device parameters via a graphical user interface, graphical controls known as 'desk items' have been conceived. Desk Items allow for the display and control of XFN parameters. As the name implies, they are graphical items such as sliders, pan pots, and meters that are arranged on a 'desk top'. The desk top can be the display of a workstation or of an apparatus such as a mixing console.

Desk items can be stored within a device's flash memory and are loaded in realtime into the (remote) device that wants to display them.

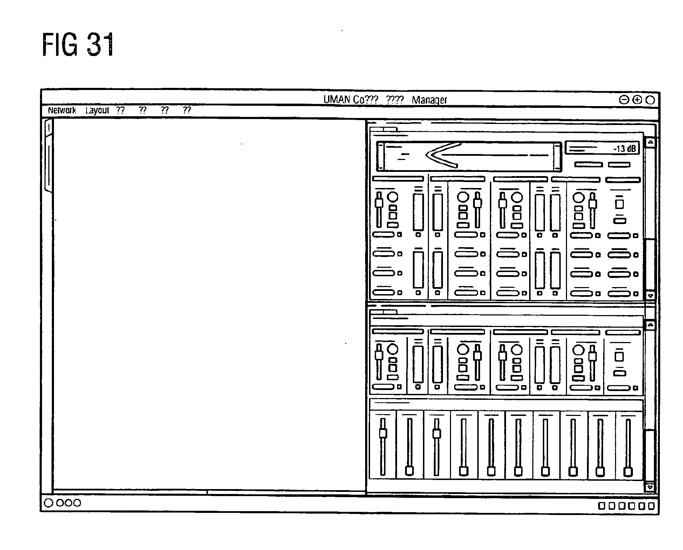

Fig. 31 shows an example of a editor software (the "UMAN Browser") with desk items loaded from a power amplifier. This browser software can be a platform independent free application. This means that a device display or a PC or MAC or embedded editor does not need a software update in order to display a further device. It simply loads the desk items from the additional device. The desk items are already joined to the appropriate parameters on the control device 3 and are through this instantly accessible.

A manufacturer (and even a user) cannot only join any device parameter, he or she can also create desk items or alternative skins that reside in the editor. Those desk items can be easily modelled, skinned and then joined to any parameter of any device in the network.

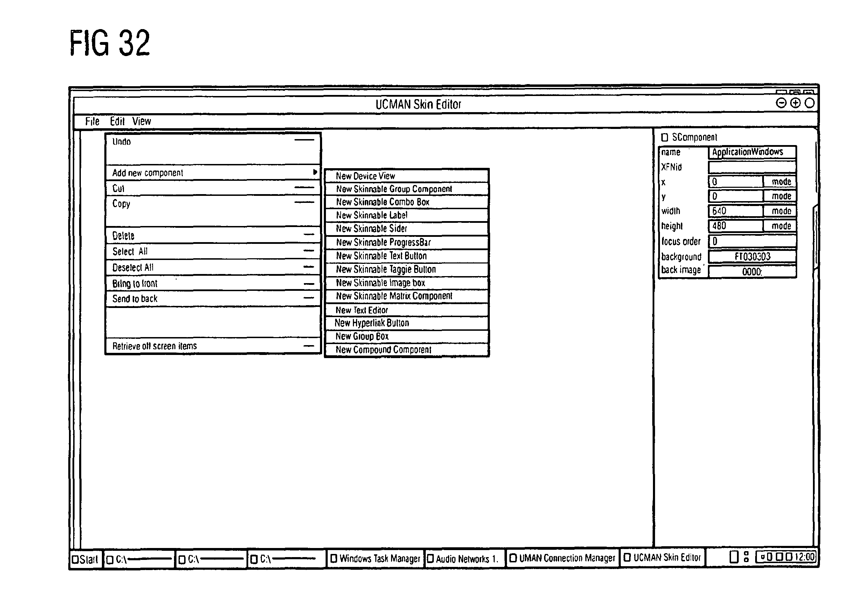

Fig. 32 shows an example of a desk item editor screen with the desk item menu opened.

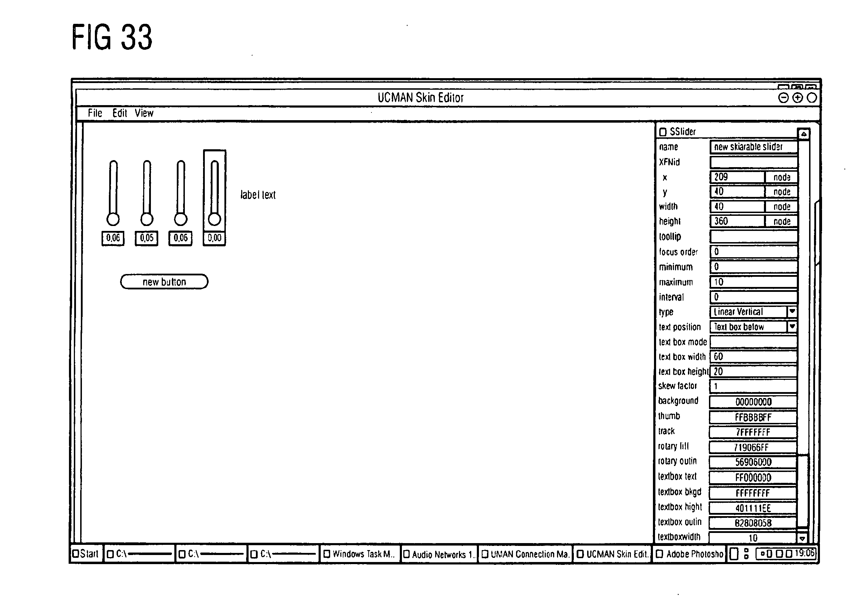

Fig. 33 shows a further example of a UMAN desk item editor screen with a user screen of several desk items.

In any computer networking, the term bandwidth usually refers to a data rate measured in bits/s, for example, network throughput. Bandwidth allocation within a digital multimedia network 1 according to the present invention is used to define the total throughput to all apparatuses on the network 1. Bandwidth allocation control mechanisms in the digital multimedia network 1 are administered and/or enforced by granting, terminating or temporarily suspending and terminating access once the allocated bandwidth has been utilized. Bandwidth allocation is a precondition throughout common deterministic realtime networks. Bandwidth allocation provides the necessary protection for the digital multimedia network 1 from being overloaded. The digital multimedia network 1 can grant certain bandwidth to different classes of units, and protects established streaming channels.

The bandwidth of the system is divided in a possible embodiment in resource units. The resource units are the smallest portions of bandwidth that a control device 3 of the network 1 can allocate. A control device 3 allocates bandwidth by reviewing a register on a resource manager device that holds the resources allocated to its class. There is one device per bus that holds several registers - one for each class. A control device 3 can find the actual available resource units from the resource manager. It subtracts the amount of bandwidth needed from the available resource units. If the result of this is positive or equals zero, the device starts streaming. Every control device 3 of the network 1 can detect if there is enough bandwidth available for a certain task and report this to its user.

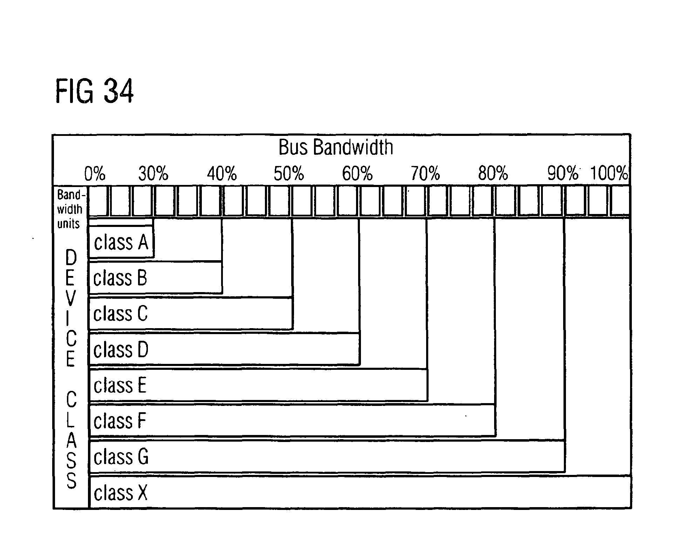

Fig. 34 shows a possible scheme of device classes within a multimedia network of the present invention.

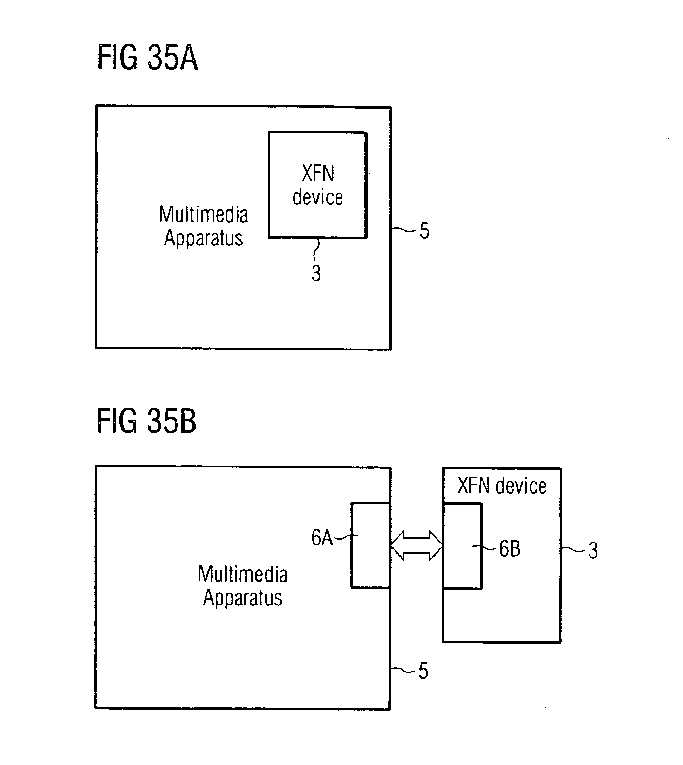

Figs. 35A, 35B show embodiments of a control device 3 according to the present invention. In the embodiment shown in Fig. 35A, the control device 3 according to the present invention is integrated into a multimedia apparatus 5, such as a mixing console, an amplifier or a loudspeaker of a digital multimedia network 1.

In the embodiment shown in Fig. 35B, the control device 3 according to the present invention is connectable to a multimedia apparatus 5 via an interface 6A, 6B such as an USB-interface, a MIDI-interface, a TDM-interface, or an I²S-interface. In another embodiment, the control device 3 is connectable to the multimedia apparatus 5 via a wireless interface.

The control devices 3 shown in Figs. 35A, 35B comprise processing means, such as a microprocessor for processing an XFN stack according to an XFN control protocol. In a possible embodiment, the XFN stack is stored as firmware in a data memory of the control device 3. In a possible embodiment, the XFN firmware is downloaded via the digital multimedia network 1 from a server. In an alternative embodiment, the XFN stack firmware is loaded into the control device 3 from a data carrier.

In the embodiment as shown in Fig. 35B, the XFN stack device 3 can be formed by an USB-stick which is plugged into a multimedia apparatus 5, such as a mixing console or an amplifier by means of an USB-interface. The embodiment as shown in Fig. 35B has the advantage that the hardware of an existing multimedia apparatus 5 does not have to be changed to allow a communication according to the XFN control protocol.

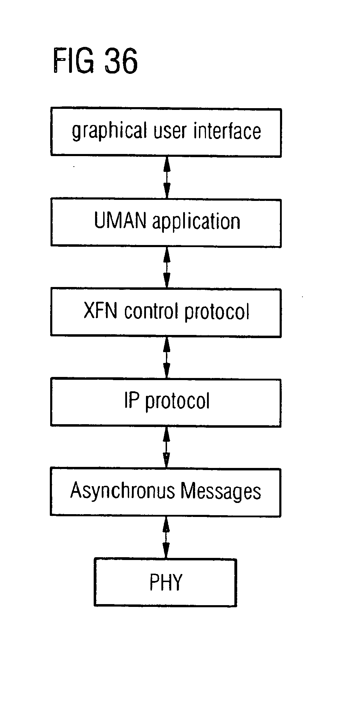

Fig. 36 shows different layers of protocols as employed by a control device 3 according to the present invention. In a possible embodiment, the control device 3 according to the present invention comprises a graphical user interface allowing the user to interact with application programs which use the XFN control command protocol for exchanging command messages CMD with other control devices 3. For exchange of command messages CMD, the control device 3 uses an IP-data communication protocol, i.e. the command messages can be wrapped into an IP-data packet. The control devices 3 connected to each other can exchange isochronous data streams if they are set up correctly to do so via the XFN control protocol.

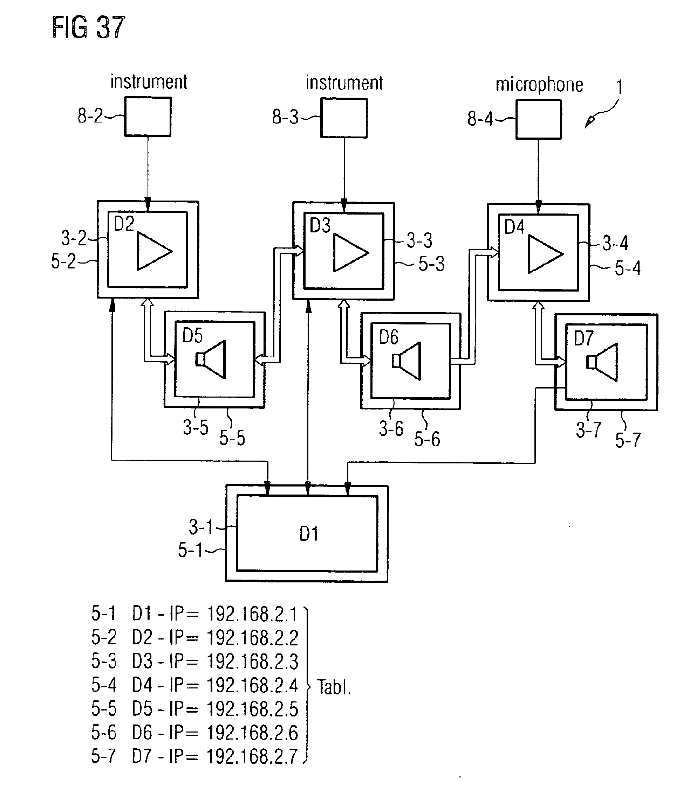

Fig. 37 shows a simple example of a digital multimedia network 1 comprising control devices 3 each comprising at least one adjustable device parameter. The controllable device modules 3-1 to 3-7 are integrated in the shown embodiment in multimedia apparatuses 5-1 to 5-7. In the simple example of Fig. 37 the digital multimedia network 1 consists of three amplifiers 5-2, 5-3, 5-4 each connected to an instrument 8-2, 8-3 or a microphone 8-4 and three loudspeakers 3-5, 3-6, 3-7. The daisy chain is closed by a control apparatus 5-5 having an integrated device 3-1 able to process command messages CMD according to the XFN control protocol. Each apparatus 5 in the example digital multimedia network 1 has an IP-address as listed below.

| | | |
|---|---|---|
| 5-1 | | **IP** = 192.168.2.1 |
| 5-2 | | **IP** = 192.168.2.2 |
| 5-3 | | **IP** = 192.168.2.3 |
| 5-4 | | **IP** =192.168.2.4 |
| 5-5 | | **IP** =192.168.2.5 |
| 5-6 | | **IP** = 192.168.2.6 |
| 5-7 | | **IP** = 192.168.2.7 |

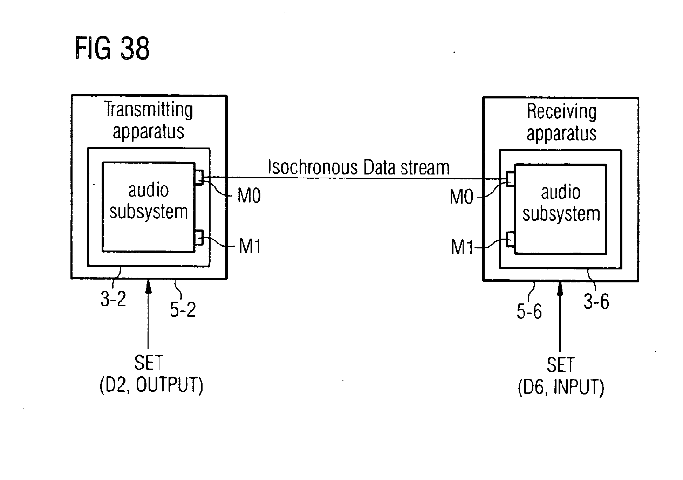

To establish an isochronous data stream from a source apparatus 5-2 formed e.g. by a digital amplifier and a target apparatus 5-6 formed e.g. by a loudspeaker, the control apparatus 5-5 including an XFN module 3-1 can send a command message set (transmitting device, output) to the XFN module 3-2 of the source apparatus 5-2 and a set command message set (target device, input) to the XFN module 3-6 of the target apparatus 5-6 as shown in Fig. 38.

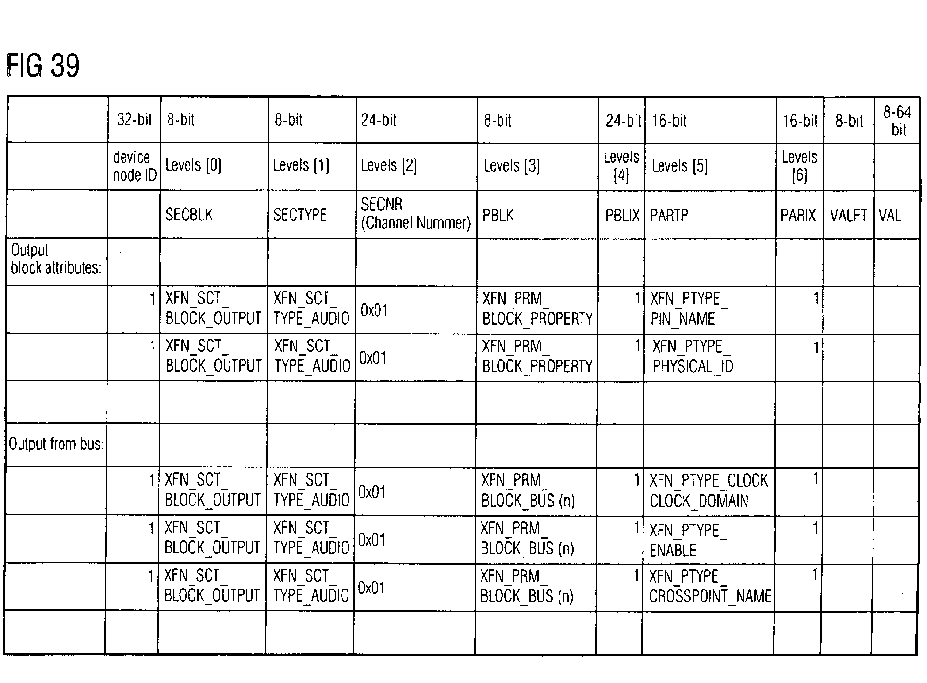

Figs. 39 shows a table indicating examples of two set commands sent by the XFN module 3-1 of the control apparatus 5-1 to the XFN device 3-6 of the receiving loudspeaker 5-6 and to the XFN device 3-2 of the transmitting amplifier 5-2 to establish an isochronous data stream between both apparatuses. Whereas the section block ID of the XFN device 3-2 within the transmitting apparatus 5-2 is set to "output" the section block ID of the XFN device 3-6 within the receiving apparatus 5-6 is set to "input" as shown in Figs. 39A, 39B. The section type of both control devices 3 is set to IEEE 1394 in the given example. Furthermore, the channel number ID in the parameter block ID and the parameter index are set to the same value, i.e. to channel number zero, multicore zero, ISOC-channel 17, respectively. The value of the command message CMD is set to "one" indicating that an isochronous data stream is established.

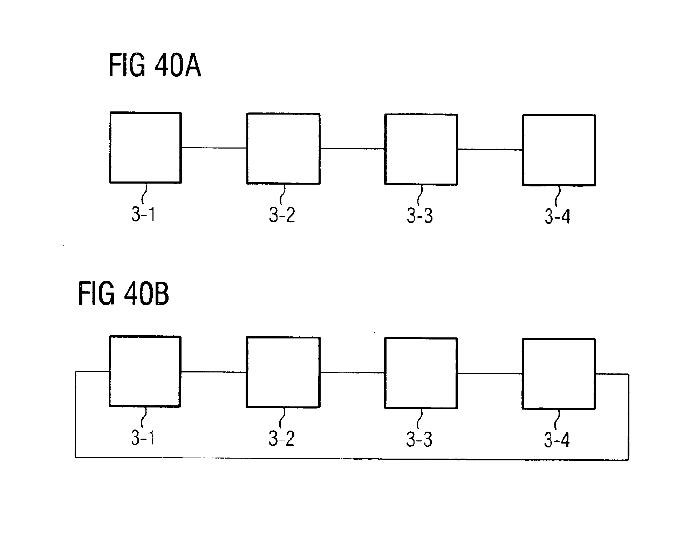

Figs. 40A, 40B show different possibilities of connecting XFN control devices 3-i as employed by the digital multimedia network 1 according to the present invention. As shown in Fig. 40A several XFN devices 30-i can be connected through a wired or wireless data communication link exchanging command messages CMD with each other.

In a preferred embodiment, the XFN control devices 3-i provided for processing an XFN stack are connected in a ring topology as shown in Fig. 40B. In this embodiment, if a link or a connection between two XFN devices 3, such as XFN control devices 3-2 and 3-3 is interrupted, the subnet shown in Fig. 40B is still fully operable. The ring structure as shown in Fig. 40B provides an inherent redundancy allowing the interruption of a link between two XFN devices 3 within the chain. For example, if the XFN devices 3 are connected to each other in a wired data communication link, i.e. via a cable, for example in an open air concert, the interruption of one cable does not affect the functionality of the subnet as shown in Fig. 40B.

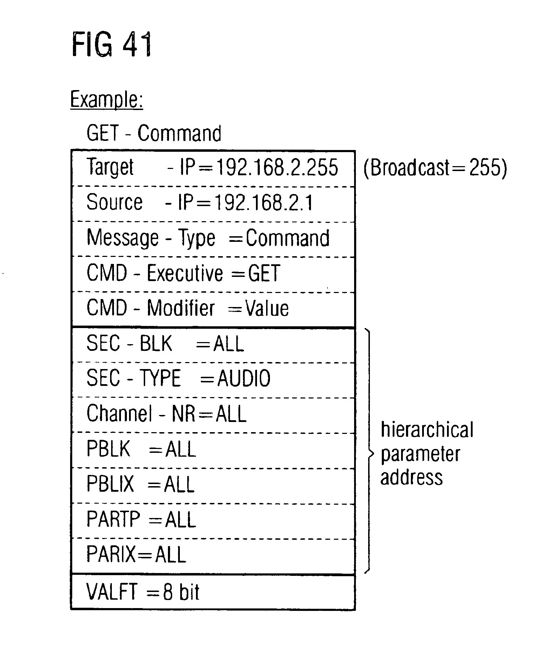

Fig. 41 shows a further example of a get command. The control XFN device 3-1 of the network 1 shown in Fig. 37 can send a subnet broadcast message indicated by a target IP-address 192.168.2.255 to the XFN control devices 3-2 to 3-7 within the audio apparatus 5-2 to 5-7. As can be seen from Fig. 41, the get command comprises several wildcards (all) to get the parameter values of all XFN devices within the subnet indicated with the target IP 192.168.2.xxx.

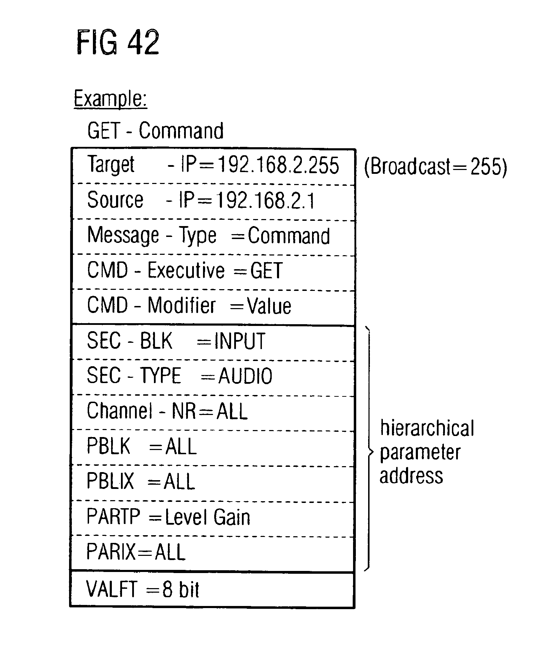

Fig. 42 shows a further example of a broadcasted get command transmitted by the controlling XFN device 3-1 within the control apparatus 5-1 to all devices 3 within the subnet. In this example, only the parameters of the input section block having the parameter type "level gain" are returned.

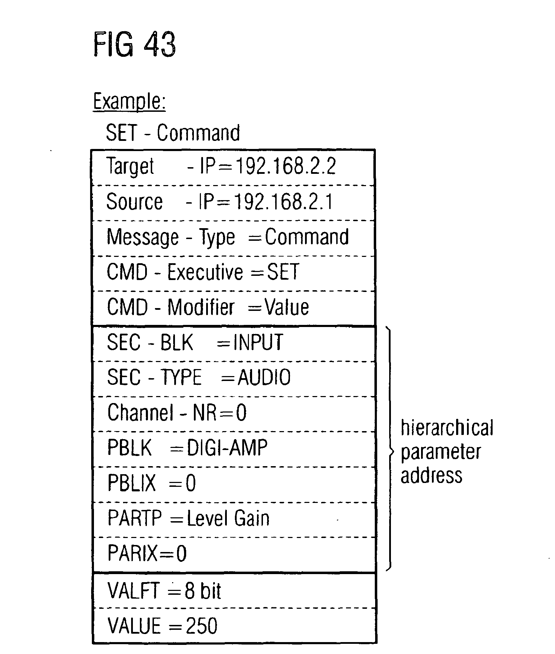

Fig. 43 shows a further example of a command message CMD as employed by the control protocol of the digital multimedia network 1 according to the present invention. In this example, the controlling XFN device 3-1 sends a set command to set a parameter of a target device 3-2 wherein the level gain of the digital amplifier is set to a value of 250. As can be seen from the above examples, the digital multimedia network 1 employing the XFN control protocol allows to set up isochronous data streams between any devices 3 of different apparatuses and to get and set easily device parameters of any controllable apparatus 5 having an integrated XFN device module 3-i.

In a preferred embodiment, the XFN devices 3 integrated into a multimedia apparatus 5 are connected with each other in a ring topology as shown in Fig. 40B. Furthermore, it is also possible to connect XFN devices 3-i in other topologies such as a one-to-one-topology between two devices 3, a one-to-N-topology, an N-to-one-topology, a N-to-M-topology and a star topology. Any XFN device 3 can listen to any isochronous data streams within its network section, e.g. on the respective bus.

After establishing an isochronous data stream as shown in Figs. 39A, 39B a running state between both XFN devices 3, e.g. between a source device and a target device can be activated by setting, for example the parameter type to "running state". By establishing an isochronous data stream, bandwidth between two XFN devices 3 will be reserved.

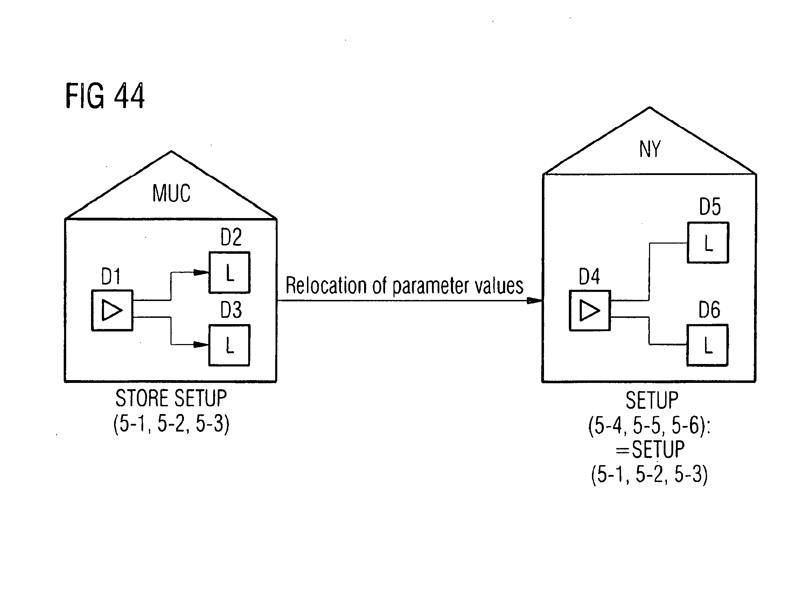

The digital multimedia network 1 according to the present invention allows a relocation of parameter values as shown in the simple example of Fig. 44. In the given example, the user having a flat in Munich (MUC) and a flat in New York (NY) has an audio system in both flats each consisting of a digital amplifier and two loudspeakers. The audio system in the Munich flat comprises an amplifier 5-1 to which loudspeakers 5-2-, 5-3 are connected, wherein the apparatus 5-1, 5-2, 5-3 each includes an XFN module 3-i having processing means for processing an XFN control protocol.

The audio system in the New York flat also comprises a digital amplifier apparatus 5-4 to which two loudspeakers 5-5, 5-6 are connected wherein all units also comprise an XFN module 3-i able to process an XFN stack and XFN commands.

Since all multimedia apparatuses 5 comprise an XFN stack module 3, it is possible for the user to store the set-up of the audio system of the Munich flat, e.g. on a data carrier to load the set-up to the audio system in his other flat located in New York. In an alternative embodiment, the user can transmit the stored set-up on a communication channel, e.g. as an attachment to an e-mail via the Internet. In a set-up a user can, for example adjust the volume or the equalizer according to his needs and relocate the set-up parameter values to another audio system within his other flat. In a possible embodiment, a calibration can be performed by means of a command modifier.

Fig. 44 just shows a very simple example. With the digital audio network 1 and the protocol as employed by the present invention, it is possible to relocate a very complicated set-up. For example, a set-up of a rock band performing one concert at a first location can be relocated for another concert at a second location. In a further example, the set-up of one concert hall can be relocated to another concert hall in another town. Furthermore, it is possible to relocate a set-up of one music studio to another music studio. Furthermore, it is not only possible to relocate an audio set-up but also a video or light scenario, for example of a musical.

## Claims

1. A digital multimedia network (1) comprising at least one apparatus (5),
wherein a device parameter of each apparatus (5) is controlled by sending a command message (CMD) to a control device (3) of said apparatus (5) containing a tree-structured hierarchical parameter address (HPA) which consists of parameter grouping identifiers each corresponding to a hierarchy level of a predetermined tree-structured parameter hierarchy used for addressing device parameters throughout said digital multimedia network (1).

2. The network according to claim 1,
wherein said command message (CMD) is sent to said control device (3) addressed by an IP-address indicated in said command message (CMD).

3. The network according to claim 2,
wherein said control device (3) is integrated in said digital multimedia apparatus (5) or connected to said digital multimedia apparatus (5) via an interface.

4. The network according to claim 1,
wherein the tree-structured parameter hierarchy comprises several parameter hierarchy levels of parameter groupings of said digital multimedia apparatus (5).

5. The network according to claim 2,
comprising cascaded backbones each consisting of a ring of routers (4),
wherein to the routers of peripheral backbones digital multimedia apparatuses (5) are connected.

6. The network according to claim 1,
wherein a wildcard parameter group identifier is provided for selecting all device parameters of the next lower level of said tree-structured parameter hierarchy.

7. A controllable digital multimedia apparatus (5) comprising a control device (3) which controls at least one adjustable device parameter of said apparatus (5),
wherein if the control device (3) receives a command message (CMD) which contains a structured parameter address consisting of parameter grouping identifiers each corresponding to a hierarchy level of a predetermined tree-structured parameter address for addressing said control device (3) and a parameter value said device parameter of said apparatus (5) is adjusted by said control device (3) to the parameter value contained in said command message (CMD).

8. The controllable apparatus according to claim 7,
wherein said control device (3) comprises a processor for processing an XFN stack.

9. The apparatus according to claim 7,
wherein said control device (3) is integrated in said digital multimedia apparatus (5) or connected to said digital multimedia apparatus (5) via an interface.

10. The apparatus according to claim 7,
comprising a memory for storing an integer parameter index value for each device parameter of said digital multimedia apparatus (5).

11. The apparatus according to claim 7,
comprising a flag register for storing flags associated with each device parameter of said digital multimedia apparatus (5) which can be modified by a command message (CMD) comprising a flags command qualifier.

12. A method for controlling at least one device parameter of a digital multimedia apparatus (5) by sending a command message (CMD) to a control device (3) of said apparatus (5) containing a structured parameter address which consists of parameter grouping identifiers each corresponding to a level of a predetermined tree-structured parameter hierarchy for addressing the device parameter and containing a parameter value to adjust the addressed device parameter of said digital multimedia apparatus (5).

13. The method according to claim 12,
wherein said command message (CMD) comprises
an IP header including a source IP address of a sender control device (3) of a source apparatus (5) and a
destination IP address of a receiving control device (3) of a target apparatus (5), an UDP header including a source port and a destination port, a parameter control protocol header and a hierarchical parameter address (HPA) or a parameter index value (PIV), and
a parameter value field.

14. The method according to claim 13,
wherein said parameter control protocol header comprises a target device ID,
a sender device ID,
a sender parameter ID,
a user level,
a secure PIN,
a message type,
a sequence ID,
a command executive, and
a command qualifier.

15. The method according to claim 13,
wherein said hierarchical parameter address (HPA) comprises a section block ID,
a section type ID,
a channel number ID,
a parameter block ID,
a parameter block index ID,
a parameter type ID and
a parameter index ID.

## Patentansprüche

1. Digital-Multimedia-Netzwerk (1), mit mindestens einer Einrichtung (5), wobei ein Geräteparameter einer jeden Einrichtung (5) durch Senden einer Befehlsmeldung (CMD) an ein Steuergerät (3) der Einrichtung (5) gesteuert wird, die eine hierarchische Parameteradresse in Baumstruktur (HPA) enthält, welche aus Parametergruppierungskennungen besteht, die jeweils einer Hierarchieebene einer vorbestimmten Parameterhierarchie in Baumstruktur entsprechen, die zum Adressieren von Geräteparametern im gesamten Digital-Multimedia-Netzwerk (1) verwendet wird.

2. Netzwerk nach Anspruch 1, wobei die Befehlsmeldung (CMD) an das Steuergerät (3) gesendet wird und durch eine in der Befehlsmeldung (CMD) angezeigte IP-Adresse adressiert ist.

3. Netzwerk nach Anspruch 2, wobei das Steuergerät (3) in der digitalen Multimediaeinrichtung (5) integriert oder über eine Schnittstelle mit der digitalen Multimediaeinrichtung (5) verbunden ist.

4. Netzwerk nach Anspruch 1, wobei die Parameterhierarchie in Baumstruktur mehrere Parameterhierarchieebenen von Parametergruppierungen der digitalen Multimediaeinrichtung (5) aufweist.

5. Netzwerk nach Anspruch 2, aufweisend kaskadierende Hauptstränge, die jeweils aus einem Ring von Routern (4) bestehen, wobei digitale Multimediaeinrichtungen (5) an die Router von Peripheriehauptsträngen angeschlossen sind.

6. Netzwerk nach Anspruch 1, wobei eine Stellvertretersymbol-Parametergruppenkennung vorgesehen ist, um alle Geräteparameter der nächstniedrigeren Ebene der Parameterhierarchie in Baumstruktur auszuwählen.

7. Steuerbare digitale Multimediaeinrichtung (5), mit einem Steuergerät (3), das mindestens einen einstellbaren Geräteparameter der Einrichtung (5) steuert, wobei, wenn das Steuergerät (3) eine Befehlsmeldung (CMD) empfängt, die eine strukturierte Parameteradresse enthält, welche aus Parametergruppierungskennungen, die jeweils einer Hierarchieebene einer vorbestimmten Parameteradresse in Baumstruktur zum Adressieren des Steuergeräts (3) entsprechen, und einem Parameterwert besteht, der Geräteparameter der Einrichtung (5) durch das Steuergerät (3) auf den Parameterwert eingestellt wird, der in der Befehlsmeldung (CMD) enthalten ist.

8. Steuerbare Einrichtung nach Anspruch 7, wobei das Steuergerät (3) einen Prozessor zum Verarbeiten eines XFN-Stapels aufweist.

9. Einrichtung nach Anspruch 7, wobei das Steuergerät (3) in der digitalen Multimediaeinrichtung (5) integriert oder über eine Schnittstelle mit der digitalen Multimediaeinrichtung (5) verbunden ist.

10. Einrichtung nach Anspruch 7, mit einem Speicher zum Speichern eines ganzzahligen Parameterindexwertes fiir jeden Geräteparameter der digitalen Multimediaeinrichtung (5).

11. Einrichtung nach Anspruch 7, mit einem Merkerregister zum Speichern von Merkern, die mit jedem Geräteparameter der digitalen Multimediaeinrichtung (5) verknüpft sind, die durch eine Befehlsmeldung (CMD), die einen Merkerbefehl-Kennzeichner aufweist, modifizierbar sind.

12. Verfahren zum Steuern mindestens eines Geräteparameters einer digitalen Multimediaeinrichtung (5) durch Senden einer Befehlsmeldung (CMD) an ein Steuergerät (3) der Einrichtung (5), enthaltend eine strukturierte Parameteradresse, die aus Parametergruppierungskennungen besteht, die jeweils einer Ebene einer vorbestimmten Parameterhierarchie in Baumstruktur zum Adressieren des Geräteparameters entsprechen, sowie einen Parameterwert, um den adressierten Geräteparameter der digitalen Multimediaeinrichtung (5) einzustellen.

13. Verfahren nach Anspruch 12, wobei die Befehlsmeldung (CMD) aufweist:
- einen IP-Header, einschließend eine IP-Quelladresse eines Sendersteuergeräts (3) einer Quelleinrichtung (5) und eine
- IP-Zieladresse eines Empfangssteuergeräts (3) einer Zieleinrichtung (5),
- einen UDP-Header, einschließend einen Quell- und einen Zielanschluss,
- einen Parametersteuerprotokoll-Header und eine hierarchische Parameteradresse (HPA) oder einen Parameterindexwert (PIV), und
- ein Parameterwertfeld.

14. Verfahren nach Anspruch 13, wobei der Parametersteuerprotokoll-Header aufweist:
- eine Zielgerät-ID,
- eine Sendergerät-ID,
- eine Senderparameter-ID,
- eine Benutzerebene,
- einen Sicherheits-PIN,
- eine Meldungsart,
- eine Sequenz-ID,
- ein Befehlssteuerprogramm, und
- einen Befehlskennzeichner.

15. Verfahren nach Anspruch 13, wobei die hierarchische Parameteradresse (HPA) aufweist:
- eine Abschnittsblock-ID,
- eine Abschnittsart-ID,
- eine Kanalnummer-ID,
- eine Parameterblock-ID,
- eine Parameterblockindex-ID,
- eine Parameterart-ID, und
- eine Parameterindex-ID.

## Revendications

1. Réseau multimédia numérique (1) comprenant au moins un appareil (5), dans lequel un paramètre de dispositif de chaque appareil (5) est commandé par l'envoi d'un message d'ordre (CMD) à un dispositif de commande (3) dudit appareil (5) contenant une adresse de paramètre hiérarchique (HPA) arborescente qui se compose d'identificateurs de groupes de paramètres correspondant chacun à un niveau hiérarchique d'une hiérarchie paramétrique arborescente prédéfinie utilisée pour l'adressage de paramètres de dispositif à travers ledit réseau multimédia numérique (1).

2. Réseau selon la revendication 1, dans lequel ledit message d'ordre (CMD) est envoyé audit dispositif de commande (3) adressé par une adresse IP indiquée dans ledit message d'ordre (CMD).

3. Réseau selon la revendication 2, dans lequel le dispositif de commande (3) est intégré dans ledit appareil multimédia numérique (5) ou connecté audit appareil multimédia numérique (5) via une interface.

4. Réseau selon la revendication 1, dans lequel la hiérarchie paramétrique arborescente comprend plusieurs niveaux de hiérarchie paramétrique de groupes de paramètres dudit appareil multimédia numérique (5).

5. Réseau selon la revendication 2, comprenant des dorsales en cascade étant chacune constituée d'un réseau de routeurs (4), des appareils multimédia numériques (5) étant connectés aux routeurs des dorsales périphériques.

6. Réseau selon la revendication 1, dans lequel un identificateur de groupes de paramètres joker est prévu pour sélectionner tous les paramètres de dispositif du niveau inférieur suivant de ladite hiérarchie paramétrique arborescente.

7. Appareil multimédia numérique contrôlable (5) comprenant un dispositif de commande (3) qui commande au moins un paramètre de dispositif réglable dudit appareil (5), dans lequel, si le dispositif de commande (3) reçoit un message d'ordre (CMD) qui contient une adresse de paramètre structurée se composant d'identificateurs de groupes de paramètres correspondant chacun à un niveau hiérarchique d'une adresse de paramètre arborescente permettant l'adressage dudit dispositif de commande (3) et une valeur de paramètre, ledit paramètre de dispositif dudit appareil (5) est réglé par ledit dispositif de commande (3) à la valeur de paramètre comprise dans ledit message d'ordre (CMD).

8. Appareil contrôlable selon la revendication 7, dans lequel ledit appareil de commande (3) comprend un processeur permettant de traiter une pile XFN.

9. Appareil selon la revendication 7, dans lequel ledit dispositif de commande (3) est intégré dans ledit appareil multimédia numérique (5) ou connecté audit appareil multimédia numérique (5) via une interface.

10. Appareil selon la revendication 7, comprenant une mémoire permettant de stocker une valeur indice de paramètre entière pour chaque paramètre de dispositif dudit appareil multimédia numérique (5).

11. Appareil selon la revendication 7, comprenant un registre à drapeaux permettant de stocker des drapeaux associés à chaque paramètre de dispositif dudit appareil multimédia numérique (5) qui peut être modifié par un message d'ordre (CMD) comprenant un qualificatif de commande de drapeaux.

12. Procédé de commande d'au moins un paramètre de dispositif d'un appareil multimédia numérique (5) par l'envoi d'un message d'ordre (CMD) à un dispositif de commande (3) dudit appareil (5) contenant une adresse de paramètre structurée qui se compose d'identificateurs de groupes de paramètres correspondant chacun à un niveau d'une hiérarchie paramétrique arborescente prédéfinie permettant l'adressage du paramètre de dispositif et contenant une valeur de paramètre pour régler le paramètre de dispositif adressé dudit appareil multimédia numérique (5).

13. Procédé selon la revendication 12, dans lequel ledit message d'ordre (CMD) comprend :
- un en-tête IP incluant une adresse IP source d'un dispositif de commande émetteur (3) d'un appareil source (5)
- et une adresse IP de destination d'un dispositif de commande récepteur (3) d'un appareil cible (5),
- un en-tête UDP incluant un port source et un port de destination,
- un en-tête de protocole de contrôle de paramètre et une adresse de paramètre hiérarchique (HPA) ou une valeur indice de paramètre (PIV), et
- un champ de valeur de paramètre.

14. Procédé selon la revendication 13, dans lequel ledit en-tête de protocole de contrôle de paramètre comprend :
- une identification de dispositif cible,
- une identification de paramètre émetteur,
- un niveau utilisateur,
- un numéro d'identification personnel (PIN) sécurisé,
- un type de message,
- une identification de séquence,
- un exécutif de commande, et
- un qualificatif de commande.

15. Procédé selon la revendication 13, dans lequel ladite adresse de paramètre hiérarchique (HPA) comprend :
- une identification de bloc de section,
- une identification de type de section,
- une identification de numéro de canal,
- une identification de bloc de paramètre,
- une identification d'indice de bloc de paramètre,
- une identification de type de paramètre, et
- une identification d'indice de paramètre.
